# EUROPEAN PATENT SPECIFICATION

(11) **EP 3 431 577 B1**
(45) Date of publication and mention of the grant of the patent: **19.04.2023**
(21) Application number: 18180008.7
(22) Date of filing: 27.06.2018
(51) Int. Cl.: C12C 11/00, C12C 13/10

(54) **BEVERAGE MAKER**
GETRÄNKEZUBEREITER
PRÉPARATEUR DE BOISSONS

(30) Priority: 19.07.2017 KR 20170091255
(43) Date of publication of application: 23.01.2019
(73) Proprietor: LG Electronics Inc., Yeongdeungpo-gu Seoul 07336 (KR)
(72) Inventor: Hong, Jinpyo, 08592 Seoul (KR); Yoon, Shic, 08592 Seoul (KR); Lee, Daewoong, 08592 Seoul (KR)
(74) Representative: Ter Meer Steinmeister & Partner

(56) References cited:
- CN-A- 104 498 246
- US-A1- 2016 076 807

## Description

### BACKGROUND

The present disclosure relates to a beverage maker, and more particularly, to a beverage maker in which the temperature of a fermentation tank module is controlled.

Beverages are collectively referred to as drinkable liquids such as alcoholic drinks and teas. For example, the beverages may be classified into various categories including water (drinking water) for solving thirst, a fruit drink having unique scent and taste, a soft drink providing a feeling of refreshment, a favorite beverage expected to have an arousal effect, an alcoholic beverage having an alcoholic effect, and the like.

Beer is a representative example of such beverages. The beer is an alcoholic drink produced by making juice using malt made by sprouting barley, filtering the juice, adding hops to the filtered juice, and then fermenting the juice using yeast.

A consumer may buy ready-made products produced and sold by beer manufacturers or may drink house beer (or craft beer) produced by directly fermenting materials of beer in a house or a bar.

The house beer may be manufactured in various kinds as compared with the ready-made products, and may be manufactured in accordance with tastes of consumers.

Materials for producing beer may include water, malt, hops, yeast, scent additives, and the like.

The yeast may ferment the malt while being added to the malt, and may help to produce alcohol and carbonic acid.

The scent additives correspond to additives such as fruits, syrup, and vanilla beans, which increase taste of the beer.

In general, the house beer may be produced by totally three steps including a wort generating step, a fermentation step, and a mature step, and two weeks to three weeks may be consumed from the wort generating step to the mature step.

It is important that the house beer maintains an optimum temperature during the fermentation step, and as the house beer is manufactured more simply, convenience of a user may be improved.

In recent years, a beverage maker has gradually been used which may easily produce beer in a house or a bar, and it is preferable that such a beverage maker safely and easily produces beer.

US 2016/076807 A1 relates to a personal beverage processing apparatus for processing alcoholic and non-alcoholic beverages which includes an outer shell defining a generally airtight interior area. A plurality of environmental modules are situated in the interior area of the outer shell, each environmental module includes a vessel for receiving a liquid, at least one environmental sensor configured to detect an environmental condition, a module fan, and a pressure sensitive vent.

CN 104 498 246 A relates to a household wine brewing machine. The household wine brewing machine is divided into four parts, namely a sealing cover, a fermentation tank, a control part and a power part.

### SUMMARY

The present disclosure provides a beverage maker which may simply produce a beverage by adjusting the temperature of a fermentation tank by a refrigeration cycle.

The present disclosure also provides a beverage maker in which noise generated toward the front surface is reduced.

The present disclosure also provides a beverage maker in which heat of a condenser is effectively dissipated.

Said objectives have, in particular, be addressed with the subject-matter of the independent claim. Advantageous embodiments are described in the dependent claims.

According to the present invention, a beverage maker includes a fermentation module comprising a fermentation tank module having an opening formed in the fermentation tank module, and a fermentation lid configured to open/close the opening; a temperature controller configured to control a temperature inside the fermentation tank module; a blower fan configured to dissipate heat of the temperature controller; a rear cover arranged behind the fermentation module, and having a through-hole; a gas discharging channel module connected to the fermentation module to discharge gas inside the fermentation module; wherein the through-hole is formed in the rear cover configured for discharging air blown by the blower fan and the gas discharged from the gas discharging channel module through the through-hole.

The present disclosure provides the following further aspects.

In an example, it is provided a beverage maker comprising a fermentation module comprising a fermentation tank module having an opening formed in the fermentation tank module, and a fermentation lid configured to open/close the opening; a refrigeration cycle device having a compressor, a condenser, an expansion mechanism, and an evaporator formed in the refrigeration cycle device such that a refrigerant circulates in the compressor, the condenser, the expansion mechanism, and the evaporator, the evaporator being configured to adjust a temperature inside the fermentation tank module; a blower fan configured to dissipate heat of the condenser; a rear cover arranged behind the fermentation module, and having a through-hole configured for discharging air blown by the blower fan.

A beverage maker according to an example includes a fermentation module including a fermentation tank module having an opening formed therein, and a fermentation lid configured to open/close the opening, a refrigeration cycle device having a compressor, a condenser, an expansion mechanism, and an evaporator formed therein in which a refrigerant circulates, the evaporator being configured to adjust a temperature inside the fermentation tank module, a blower fan configured to dissipate heat of the condenser, a gas discharging channel module connected to the fermentation module to discharge gas inside the fermentation module, and a rear cover arranged behind the fermentation module and having a through-hole formed therein through which air blown by the blower fan and the gas discharged from the gas discharging channel module are discharged.

The condenser may be arranged between the blower fan and the through-hole.

The beverage maker according to the embodiment of the present disclosure may further include a main frame having a condenser accommodating space formed therein in which the condenser is accommodated and which communicates with the through-hole.

A blower fan mounted portion on which the blower fan is mounted may be formed in the main frame, and the blower fan mounted portion may be located in front of the condenser accommodating space.

The gas discharging channel module may include a gas discharging channel connected to the fermentation module, and a gas discharging valve connected to the gas discharging channel, and a gas discharging space in which the gas discharging valve is arranged and which communicates with the through-hole may be further formed in the main frame.

A rear surface of the condenser accommodating space and/or the gas discharging space may be opened.

A barrier may be provided between the condenser accommodating space and the gas discharging space.

The gas discharging valve may be located behind the fermentation module.

A beverage maker according to an example includes a fermentation module including a fermentation tank module having an opening formed therein, and a fermentation lid configured to open/close the opening, a refrigeration cycle device having a compressor, a condenser, an expansion mechanism, and an evaporator formed therein in which a refrigerant circulates, the evaporator being configured to adjust a temperature inside the fermentation tank module, a blower fan having a front surface directed to a space between the compressor and the fermentation module and a rear surface directed to the condenser, and a rear cover arranged behind the fermentation module and having a through-hole located behind the condenser.

The compressor may be spaced apart from the fermentation module in a left-right direction.

At least a part of the blower fan may be located between the compressor and the fermentation module in a left-right direction, and the condenser may be arranged behind the blower fan.

A beverage maker according to an example includes a fermentation module including a fermentation tank module having an opening formed therein, and a fermentation lid configured to open/close the opening, a refrigeration cycle device having a compressor, a condenser, an expansion mechanism, and an evaporator formed therein in which a refrigerant circulates, the evaporator being configured to adjust a temperature inside the fermentation tank module, a blower fan arranged between the compressor and the condenser, and a rear cover arranged behind the fermentation module and having a through-hole located behind the condenser.

The compressor may be spaced apart from the fermentation module in a left-right direction.

The compressor, the blower fan, and the condenser may be arranged in a row in a front-rear direction.

The compressor, the blower fan, and the condenser are arranged in a row to be inclined in a front-rear direction.

A distance between the fermentation module and the compressor may be larger than a distance between the fermentation module and the condenser.

A beverage maker according to an example includes a fermentation module including a fermentation tank module having an opening formed therein and a fermentation lid configured to open/close the opening, a temperature controller configured to control a temperature inside the fermentation tank module, a blower fan configured to dissipate heat of the temperature controller, a gas discharging channel module connected to the fermentation module to discharge gas inside the fermentation module, and a cover having a through-hole formed therein such that air blown by the blower fan and the gas discharged from the gas discharging channel module are discharged through the same surface of the through-hole.

### BRIEF DESCRIPTION OF THE DRAWINGS

Embodiments will be described in detail with reference to the following drawings in which like reference numerals refer to like elements, and wherein:
FIG. 1 is a view illustrating a beverage maker according to an embodiment of the present disclosure;
FIG. 2 is a perspective view illustrating the beverage maker according to the embodiment of the present disclosure;
FIG. 3 is an exploded perspective view illustrating the beverage maker of FIG. 2;
FIG. 4 is a perspective view illustrating a state in which a refrigeration cycle device and a fermentation module are mounted on a base according to the embodiment of the present disclosure;
FIG. 5 is a rear view illustrating a state in which the refrigeration cycle device and the fermentation module are mounted on the base according to the embodiment of the present disclosure;
FIG. 6 is a perspective view illustrating a main frame according to the embodiment of the present disclosure;
FIG. 7 is a perspective view illustrating the main frame of FIG. 6 when viewed in a different direction;
FIG. 8 is a plan view illustrating the main frame of FIG. 6;
FIG. 9 is a front view illustrating a case where a plurality of components are arranged in the main frame of FIG. 6;
FIG. 10 is a rear view illustrating a case where the plurality of components are arranged in the main frame of FIG. 6;
FIG. 11 is a sectional view illustrating a dispenser for the beverage maker according to the embodiment of the present disclosure;
FIG. 12 is a flowchart illustrating a control sequence for the beverage maker according to the present disclosure;
FIG. 13 is a plan view illustrating a state in which a refrigeration cycle device and a fermentation module are mounted on a base according to another embodiment of the present disclosure;
FIG. 14 is a perspective view illustrating a state in which the refrigeration cycle device and the fermentation module are mounted on the base according to another embodiment of the present disclosure;
FIG. 15 is a plan view illustrating a state in which a refrigeration cycle device and a fermentation module are mounted on a base according to yet another embodiment of the present disclosure; and
FIG. 16 is a perspective view illustrating a state in which the refrigeration cycle device and the fermentation module are mounted on the base according to the yet another embodiment of the present disclosure.

### DETAILED DESCRIPTION OF THE EMBODIMENTS

Hereinafter, detailed embodiments of the present disclosure will be described in detail with reference to the accompanying drawings.

Although beer will be described below as an example of a beverage produced using a beverage maker in the specification, beverages that may be produced using the beverage maker are not limited to the beer, and various kinds of beverages may be produced by a beverage maker according to an embodiment of the present disclosure.

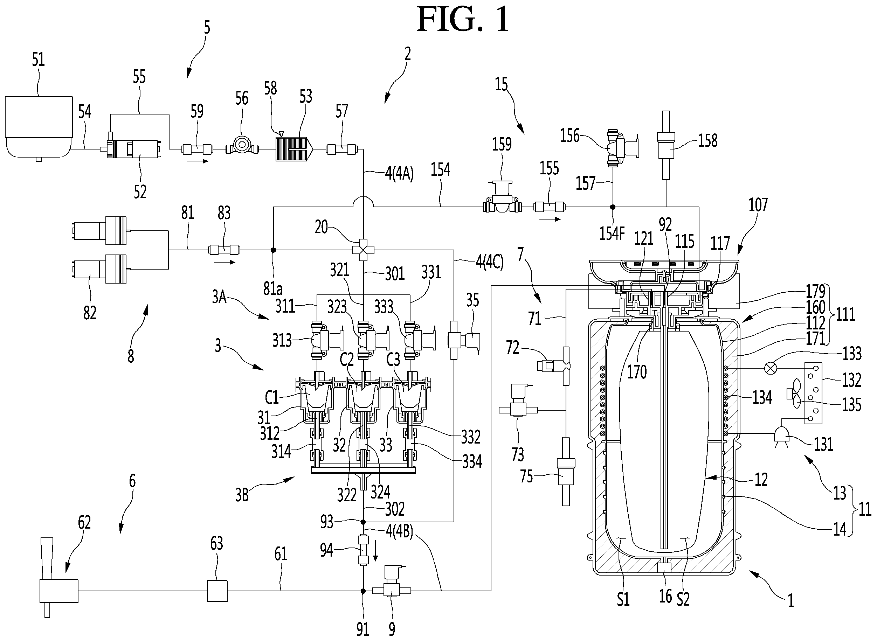

FIG. 1 is a view illustrating a beverage maker according to an embodiment of the present disclosure.

The beverage maker includes a fermentation module 1. The fermentation module 1 includes a fermentation tank module 111 having an opening 170 formed therein, and a fermentation lid 107 configured to open/close the opening 170. Also, the beverage maker further includes a temperature controller 11 configured to adjust the temperature inside the fermentation tank module 111.

The fermentation tank module 111 may include a fermentation case 160, a fermentation tank 112 accommodated in the fermentation case 160 and having an inner space S1 formed therein to communicate with the opening 170, and an insulation portion 171 located between the fermentation case 160 and the fermentation tank 112 to surround the fermentation tank 112. The fermentation tank module 111 may further include a lid seated body 179 on which the fermentation lid 107 is seated.

The inner space S1 of the fermentation tank 112 may be a space where a beverage is to be produced.

The beverage maker may further include a channel module 2 connected to the fermentation module 1. The channel module 2 may include at least one channel and at least one valve.

The channel module 2 may include a main channel 4 connected to the fermentation module 1. The main channel 4 may supply water or various materials required for producing the beverage to the space S1 of the fermentation tank 112. Also, the channel module 2 may further include a main valve 9 installed in the main channel 4. The main valve 9 may open/close the main channel 4.

The beverage maker may further include a material supplier 3 connected to the main channel 4 and having material accommodating portions formed therein. The channel module 2 may further include a material supplier inlet channel module 3A and a material supplier outlet channel module 3B connecting the material supplier 3 and the main channel 4.

The beverage maker may further include a water tank 51 in which water is stored, and the channel module 2 may further include a water supplying channel module 5 configured to supply the water from the water tank 51 to the main channel 4.

The channel module 2 may further include a beverage discharging channel module 6 configured to discharge the beverage to the outside. The beverage discharging channel module 6 may further include a beverage discharging channel 61 connected to the main channel 4. The beverage inside the fermentation tank 112 may flow to the main channel 4, and may pass through a part of the main channel 4 to flow to the beverage discharging channel 61.

The channel module 2 further includes a gas discharging channel module 7 connected to the fermentation module 1. The gas discharging channel module 7 discharges gas inside a fermentation container 12 to the outside. The inner space S1 of the fermentation tank 112 may be a space where the fermentation container 12 in which the beverage is produced is accommodated.

The beverage maker may further include an air injection pump 82 configured to pump air, and the channel module 2 may further an air injection channel module 8 connected to the air injection pump 82 to inject the air to the main channel 4.

The channel module 2 may further include an air controlling channel module 15 connected to the fermentation module 1. The air controlling channel module 15 may inject the air into the fermentation module 1 or discharge the air in the fermentation module 1.

A main channel connector 115 may be formed in the fermentation module 1. The main channel 4 may be connected to the main channel connector 115.

The fermentation tank 112 may be an assembly of a plurality of members.

The fermentation lid 107, which is configured to seal the inside of the fermentation tank module 111, may be arranged above the fermentation tank module 111 to cover the opening 170. The main channel connector 115 connected to the main channel 4 may be provided in the fermentation lid 107.

The fermentation container 12 may be a container separately provided to prevent materials for the beverage and a completed beverage from being stuck to an inner wall of the fermentation tank 112. The fermentation container 12 may be provided detachably from the fermentation tank 112. The fermentation container 12 may be seated inside the fermentation tank module 111 to ferment the beverage inside the fermentation tank module 111, and may be withdrawn to the outside of the fermentation tank module 111 after being used.

The fermentation container 12 may be a package in which materials for producing the beverage are accommodated. A beverage producing space S2 in which the materials for the beverage are accommodated and the beverage is produced may be formed inside the fermentation container 12. The fermentation container 12 may be smaller than the inner space S1 of the fermentation tank 112.

The fermentation container 12 may be inserted into and accommodated in the fermentation tank module 111 while the materials are accommodated therein. The fermentation container 12 may be inserted into the fermentation tank module 111 and may be accommodated in the fermentation tank module 111 in a state in which the opening 170 of the fermentation tank module 111 is opened.

After the fermentation container 12 is inserted into the fermentation tank module 111, the fermentation lid 107 may cover the opening 170 of the fermentation tank module 111. The fermentation container 12 may help to ferment the materials while being accommodated in the inner space S1 sealed by the fermentation tank 112 and the fermentation lid 107. The fermentation container 12 may be expanded by the pressure therein while the beverage is being produced, When the beverage contained in the fermentation container 12 is discharged, and the air is supplied to between the fermentation tank 112 and the fermentation container 12, the fermentation container 12 may be compressed by the air inside the fermentation tank 112.

The fermentation case 160 may be an assembly of a plurality of members. The fermentation case 160 may constitute an outer appearance of the fermentation tank module 111.

The fermentation tank 112 may be arranged inside the fermentation case 160. The outer circumference and the bottom surface of the fermentation tank 112 may be spaced apart from the inner surface of the fermentation case 160. In more detail, the outer circumference of the fermentation tank 112 may be spaced apart from the inner circumference of the fermentation case 160, and the outer bottom surface of the fermentation tank 112 may be spaced apart from the inner bottom surface of the fermentation case 160.

The insulation portion 171 may be located between the fermentation case 160 and the fermentation tank 112. The insulation portion 171 may be located inside the fermentation case 160 to surround the fermentation tank 112. Accordingly, the temperature of the fermentation tank 112 may be maintained constant.

The insulation portion 171 may be formed of expanded polystyrene or polyurethane that has high insulation performance and may absorb vibrations.

Meanwhile, the beverage maker further includes a temperature controller configured to change the temperature inside the fermentation tank module 111. In more detail, the temperature controller may change the temperature of the fermentation tank 112.

The temperature controller 11, which is configured to heat or cool the fermentation tank 112, may control the temperature of the fermentation tank 112 to an optimum temperature for fermentation of the beverage.

The temperature controller 11 may include a refrigeration cycle device 13 having a compressor 131, a condenser 132, an expansion mechanism 133, and an evaporator 134, and any one of the condenser 132 and the evaporator 134 may be arranged in the fermentation tank 112.

The beverage maker further includes a blower fan 135 configured to dissipate heat of the temperature controller 11. In more detail, the blower fan 135 may be configured to cool the condenser 132 of the refrigeration cycle device 13.

When the condenser 132 is arranged in the fermentation tank 112, the refrigeration cycle device 13 may heat the fermentation tank 112 to adjust the temperature of the fermentation tank 112. In this case, the condenser 132 may be arranged to be in contact with the outer surface of the fermentation tank 112. The condenser 132 may include a condensation tube wound on the outer surface of the fermentation tank 112.

When the evaporator 134 is arranged in the fermentation tank 112, the refrigeration cycle device 13 may cool the fermentation tank 112 to adjust the temperature of the fermentation tank 112. In this case, the evaporator 134 may be arranged to be in contact with the outer surface of the fermentation tank 112. The evaporator 134 may be an evaporation tube wound on the outer surface of the fermentation tank 112. The evaporator 134 may be accommodated between the fermentation tank 112 and the insulation portion 171, and may cool the fermentation tank 112 insulated by the insulation portion 171.

When the evaporator 134 is arranged in the fermentation tank 112, the temperature controller 11 may further include a heater 14 configured to heat the fermentation tank 112. The heater 14 may be installed to be in contact with the outer surface of the fermentation tank 112, and may be configured as a heating heater heated when electric power is applied thereto. The heater 14 may be configured as a line heater, and may be wound on the outer surface of the fermentation tank 112.

The heater 14 may be located below the evaporator 134. In more detail, the evaporator 134 may be wound on an upper portion of the outer surface of the fermentation tank 112, and the heater 14 may be wound on a lower portion of the outer surface of the fermentation tank 112. Accordingly, fluid may be naturally convected inside the fermentation tank 112, and distribution of the internal temperature of the fermentation container 12 may become uniform.

The refrigeration cycle device 13 may be configured as a heat pump. The refrigeration cycle device 13 may include a refrigerant channel switching valve (not illustrated). The refrigerant channel switching valve may be configured as a four-way valve. The refrigerant channel switching valve may be connected to a suction channel of the compressor 131 and a discharge channel of the compressor 131, may be connected to the condenser 132 through a condenser connecting channel, and may be connected to the evaporator 134 through an evaporator connecting channel.

When the fermentation tan 112 is cooled, the refrigerant channel switching valve may guide a refrigerant compressed by the compressor 131 to the condenser 132, and may guide the refrigerant discharged from the evaporator 134 to the compressor 131.

When the fermentation tan 112 is heated, the refrigerant channel switching valve may guide the refrigerant compressed by the compressor 131 to the evaporator 134, and may guide the refrigerant discharged from the condenser 132 to the compressor 131 as well.

Meanwhile, it is apparent that the above-described configuration of the temperature controller 11 is merely an example, and the configuration of the temperature controller 11 may change as needed.

For example, the temperature controller 11 may include a thermoelectric module (TEM). The TEM may include a thermoelectric element, a heat dissipation plate, and a heat absorption plate, the heat dissipation plate may be located inside the fermentation module 1, and the heat dissipation plate may be located outside the fermentation module 1.

In this case, the blower fan 135 may be arranged to face the heat dissipation plate, and the blower fan 135 may function as a heat dissipation fan.

Meanwhile, when beer is produced using the beverage maker, materials for producing the beer may include water, malt, yeast, hops, scent additives, and the like.

The beverage maker may include both the material supplier 3 and the fermentation container 12, and the materials for producing the beverage may be distributed and accommodated in the material supplier 3 and the fermentation container 12. Some materials among the materials for producing the beverage may be accommodated in the fermentation container 12, and the other materials may be accommodated in the material supplier 3. The other materials accommodated in the material supplier 3 together with the water supplied from the water supplying channel module 5 may be supplied to the fermentation container 12, and may be mixed with the some materials accommodated in the fermentation container 12.

A main material necessary for producing the beverage may be accommodated in the fermentation container 12, and additives added to the main material may be accommodated in the material supplier 3. In this case, the additives accommodated in the material supplier 3 may be supplied to the fermentation container 12 while being mixed with the water supplied from the water supplying channel module 5, and may be mixed with the main material accommodated in the fermentation container 12.

The main material accommodated in the fermentation container 12 may be a material having a larger capacity than those of the other materials. For example, in the case of the beer, the main material may be the malt among the malt, the yeast, the hops, and the scent additives. Further, the additives accommodated in the material supplier 3 may correspond to the other materials except for the malt among the materials for producing the beer, and the other materials may include the yeast, the hops, the scent additives, and the like.

The beverage maker may not include the material supplier 3 and may include the fermentation container 12. In this case, the main material may be accommodated in the fermentation container 12, and a user may directly insert the additives into the fermentation container 12.

When the beverage maker includes both the material supplier 3 and the fermentation container 12, the beverage may be produced more simply. For convenience of description, an example where both the material supplier 3 and the fermentation container 12 are included will be described below. However, it is apparent that the present disclosure is not limited to the example where both the material supplier 3 and the fermentation container 12 are included.

The materials inside the fermentation container 12 may be fermented as a time elapses, and the completely produced beverage inside the fermentation container 12 may flow to the main channel 4 through the main channel connector 115, may flow from the main channel 4 to the beverage discharging channel module 6, and may be discharged.

The main channel 4 may have one end connected to the water supplying channel module 5, and may have the other end connected to the main channel connector 115 formed in the fermentation module 1. Also, an air injection channel 81 configured to guide the air pumped by the air injection pump 82 may be connected to the main channel 4.

The material supplier 3 may be connected to the main channel 4. The water or the air of the main channel 4 may be introduced into the material supplier 3, and may flow in the material supplier 3.

The materials necessary for producing the beverage may be accommodated in the material supplier 3, and the water supplied from the water supplying channel module 5 or the air supplied from the air injection channel module 8 may pass through the material supplier 3. For example, when the beverage produced by the beverage maker is the beer, materials accommodated in the material supplier 3 may include yeast, hops, scent additives, and the like.

The materials accommodated in the material supplier 3 may be directly accommodated in the material accommodating portions formed in the material supplier 3. At least one material accommodating portion may be formed in the material supplier 3. The plurality of material accommodating portions may be formed in the material supplier 3. In this case, the plurality of material accommodating portions may be partitioned from each other.

Meanwhile, the materials accommodated in the material supplier 3 may be accommodated in capsules C1, C2, and C3, and at least one capsule accommodating portion 31, 32, and 33 in which such capsules C1, C2, and C3 are accommodated may be formed in the material supplier 3.

When the materials are accommodated in the capsules C1, C2, and C3, in the material supplier 3, the capsules C1, C2, and C3 may be seated and withdrawn. The material supplier 3 may be configured as a capsule kit assembly in which the capsules C1, C2, and C3 are separately accommodated.

The materials contained in the material accommodating portion or the capsules C1, C2, and C3 may be extracted by the hydraulic pressure of the water supplied from the water supplying channel module 5 or the pneumatic pressure of the air injected from the air injection channel module 8.

When the materials are extracted by the hydraulic pressure, the water supplied from the water supplying channel module 5 to the main channel 4 may be mixed with the materials while passing through the material accommodating portion or the capsules C1, C2, and C3, and the materials accommodated in the material accommodating portion or the capsules C1, C2, and C3 together with the water may flow to the main channel 4.

On the other hand, when the materials are extracted by the pneumatic pressure, the air supplied from the air injection channel module 8 to the material supplier 3 may push the materials while passing through the material accommodating portion or the capsules C1, C2, and C3, and the materials accommodated in the material accommodating portion or the capsules C1, C2, and C3 together with the air may flow to the main channel 4.

A plurality of different kinds of additives may be accommodated in the material supplier 3 while being separated from each other. For example, when the beer is produced, the plurality of additives accommodated in the material supplier 3 may include the yeast, the hops, and the scent additives, which may be accommodated while being separated from each other.

When the plurality of material accommodating portions may be formed in the material supplier 3, each of the plurality of material accommodating portions may be connected to the main channel 4 and the material supplier inlet channel module 3A or may be connected to the main channel 4 and the material supplier outlet channel module 3B.

When the plurality of capsule accommodating portions 31, 32, and 33 are formed in the material supplier 3, each of the plurality of capsule accommodating portions 31, 32, and 32 may be connected to the main channel 4 and the material supplier inlet channel module 3A or may be connected to the main channel 4 and the material supplier outlet channel module 3B.

The material accommodating portions of the material supplier 3 and the capsule accommodating portions of the material supplier 3 may have substantially the same configuration. When the capsules are inserted into the material supplier 3 in a state in which the materials are accommodated in the capsules, the capsules may be named the capsule accommodating portions, and when the capsules are directly accommodated in the material supplier 3 in a state in which the materials are not contained in the capsules, the capsules may be named the material accommodating portions. Since the material accommodating portions and the capsule accommodating portions have substantially the same configuration, for convenience of description, an example where the capsule accommodating portions are formed in the material supplier 3 will be described below.

The material supplier 3 may have the capsule accommodating portions 31, 32, and 33 formed therein in which the capsules containing the additives are detachably accommodated, and may be connected to the main channel 4 and the material supplier inlet channel module 3A or may be connected to the main channel 4 and the material supplier outlet channel module 3B.

The material supplier inlet channel module 3A may include material supplier inlet channels 301, 311, 321, and 331 connecting the main channel 4 and the capsule accommodating portions 31, 32, and 33. The material supplier inlet channel module 3A may further include opening/closing valves 313, 323, and 333 installed in the material supplier inlet channels 301, 311, 321, and 331. The opening/closing valves 313, 323, and 33 may open/close the material supplier inlet channels 301, 311, 321, and 331.

The material supplier outlet channel module 3B may include material supplier outlet channels 301, 311, 321, and 331 connecting the capsule accommodating portions 31, 32, and 33 and the main channel 4. The material supplier outlet channel module 3B may further include check valves 314, 324, and 334 installed in the material supplier outlet channels 301, 311, 321, and 331. The check valves 314, 324, and 334 may prevent the water or the air from flowing backward to the capsule accommodating portions 31, 32, and 33 through the material supplier outlet channels 302, 312, 322, and 332.

The material supplier 3 may have the plurality of capsule accommodating portions 31, 32, and 33 formed therein while the plurality of capsule accommodating portions 31, 32, and 33 may be separated from each other. Each of the plurality of capsule accommodating portions 31, 32, and 33 may be connected to the corresponding material supplier inlet channel and the corresponding material supplier outlet channel.

Hereinafter, a first additive, a second additive, and a third additive may be accommodated in the material supplier 3. The first additive may be yeast, the second additive may be hops, and the third additive may be scent additives.

The material supplier 3 may include a first capsule accommodating portion 31 in which the first capsule C1 containing the first additive is accommodated, a second capsule accommodating portion 32 in which the second capsule C2 containing the second additive is accommodated, and a third capsule accommodating portion 33 in which the third capsule C3 containing the third additive is accommodated.

The first material supplier inlet channel 311 configured to guide the water or the air to the first capsule accommodating portion 31 may be connected to the first capsule accommodating portion 31, and the first material supplier output channel 312 configured to guide the water, a mixture of the water and the first additive, and the air from the first capsule accommodating portion 31 may be connected to the first capsule accommodating portion 31. The first opening/closing valve 313 configured to open/close the first material supplier inlet channel 311 may be installed in the first material supplier inlet channel 311. The first check valve 314 configured to prevent fluid in the first capsule accommodating portion 31 from flowing backward to the first capsule accommodating portion 31 through the first material supplier outlet channel 312 while the fluid flows to the main channel 4 may be installed in the first material supplier outlet channel 312. Here, the fluid may be the water, the mixture of the water and the first additive, and the air, which are discharged from the first capsule accommodating portion 31.

The second material supplier inlet channel 321 configured to guide the water or the air to the second capsule accommodating portion 32 may be connected to the second capsule accommodating portion 32, and the second material supplier output channel 322 configured to guide the water, a mixture of the water and the first additive, and the air from the second capsule accommodating portion 32 may be connected to the second capsule accommodating portion 31. The second opening/closing valve 323 configured to open/close the second material supplier inlet channel 321 may be installed in the second material supplier inlet channel 321. The second check valve 324 configured to prevent fluid in the second capsule accommodating portion 32 from flowing backward to the second capsule accommodating portion 32 through the second material supplier outlet channel 322 while the fluid flows to the main channel 4 may be installed in the second material supplier outlet channel 322. Here, the fluid may be the water, the mixture of the water and the second additive, and the air, which are discharged from the second capsule accommodating portion 32.

The third material supplier inlet channel 331 configured to guide the water or the air to the third capsule accommodating portion 33 may be connected to the third capsule accommodating portion 33, and the third material supplier output channel 332 configured to guide the water, a mixture of the water and the first additive, and the air from the third capsule accommodating portion 33 may be connected to the third capsule accommodating portion 31. The third opening/closing valve 333 configured to open/close the third material supplier inlet channel 331 may be installed in the third material supplier inlet channel 331. The third check valve 334 configured to prevent fluid in the third capsule accommodating portion 33 from flowing backward to the third capsule accommodating portion 33 through the third material supplier outlet channel 332 while the fluid flows to the main channel 4 may be installed in the third material supplier outlet channel 332. Here, the fluid may be the water, the mixture of the water and the third additive, and the air, which are discharged from the third capsule accommodating portion 33.

When the beverage maker includes the material supplier 3, the main channel 4 may include a first main channel 4A located before the material supplier 3 in a flow direction of the water or the air, and a second main channel 4B located after the material supplier 3 in the flow direction of the water or the air.

The main channel 4 may further include a bypass channel 4C connecting the first main channel 4A and the second main channel 4B and allowing the water or the air to bypass the material accommodating portions of the material supplier 3. The bypass channel 4C may bypass the capsule accommodating portions 31, 32, and 33 of the material supplier 3.

Here, the first main channel 4A may be connected to the water supplying channel module 5, and the second main channel 4B may be connected to the fermentation module 1. Further, the bypass channel 4C may connect such a first main channel 4A and such a second main channel 4B, and at the same time, allow the water or the air to bypass the material supplier 3.

The main channel 4 may be configured as one channel when the beverage make does not include the material supplier 3, and may include the first main channel 4A, the second main channel 4B, and the bypass channel 4C when the beverage maker includes the material supplier 3.

The bypass channel 4C may be connected in parallel to a channel of the first capsule accommodating portion 31, a channel of the second capsule accommodating portion 32, and a channel of the third capsule accommodating portion 33,

The channel module 2 may further include a bypass valve 35 installed in the bypass channel 4C to open/close the bypass channel 4C.

The first main channel 4A may be connected to a common material supplier inlet channel 301 and the bypass channel 4C. The common material supplier inlet channel 301 may be connected to the first material supplier inlet channel 311, the second material supplier inlet channel 321, and the third material supplier inlet channel 331.

The common material supplier inlet channel 301 may include a common pipe connected to the first main channel 4A, and a plurality of branching pipes branched from the common pipe and connected to the first material supplier inlet channel 311, the second material supplier inlet channel 321, and the third material supplier inlet channel 331, respectively.

The second main channel 4B may be connected to a common material supplier outlet channel 302 and the bypass channel 4C. The common material supplier outlet channel 302 may be connected to the first material supplier outlet channel 312, the second material supplier outlet channel 322, and the third material supplier outlet channel 332.

The common material supplier outlet channel 302 may include a common pipe connected to the second main channel 4B, and a plurality of joining pipes connecting the first material supplier outlet channel 312, the second material supplier outlet channel 322, and the third material supplier outlet channel 332 to the common pipe, respectively.

When the bypass valve 34 is closed, the water or the air supplied to the first main channel 4A may pass through the capsule accommodating portions 31, 32, and 33 to bypass the bypass channel 4C, and may flow to the second main channel 4B.

In contrast, when the opening/closing valves 311, 321, and 331 are closed, the water or the air supplied to the first main channel 4A may pass through the bypass channel 4C to bypass the capsule accommodating portions 31, 32, and 33, and may flow to the second main channel 4B.

The beverage maker may further include a water supplying pump 52 configured to pump the water, and a water supplying heater 53 configured to heat the water pumped by the water supplying pump 52. The water supplying channel module 5 may further include a water tank outlet channel 54 connecting the water tank 51 and the water supplying pump 52, and a water supplying pump outlet channel 55 connecting the water supplying pump 52 and the main channel 4. The water supplying heater 53 may be installed in the water supplying pump outlet channel 55.

Also, the water supplying channel module 5 may further include a water supplying check valve 59 installed in the water supplying pump outlet channel 55 to prevent the water from flowing backward to the water supplying pump 52.

A flow meter 56 configured to measure a flow rate of the water supplying pump outlet channel 55 may be installed in the water supplying pump outlet channel 55. The flow meter 56 may be arranged after the water supplying check valve 59 along the flow direction of the water.

The water supplying heater 53 may be a mold heater, and may include a heater case through which the water pumped by the water supplying pump 52 passes, and a heating heater installed inside the heater case to heat the water introduced into the heater case, in an interior thereof.

A thermal fuse 58 configured to interrupt a current applied to the water supplying heater 53 as a circuit is cut off when a temperature is high may be installed in the water supplying heater 53.

The beverage maker may further include a thermistor 57 configured to measure the temperature of the water passing through the water supplying heater 53. The thermistor 57 may be installed in the water supplying heater 53. Alternatively, the thermistor 57 may be arranged at a portion of the water supplying pump outlet channel 55, located after the water supplying heater 53 along the flow direction of the water. Also, the thermistor 57 may also be installed in the first main channel 4A.

When the water supplying pump 52 is operated, the water in the water tank 51 may be guided to the water supplying heater 53 through the water tank outlet channel 54, the water supplying pump 52, and the water supplying pump outlet channel 55, and the water guided to the water supplying heater 53 may be guided to the main channel 4 after being heated by the water supplying heater 53.

Meanwhile, the beverage maker may not include the water tank 51, the water supplying pump 52, and the water supplying heater 53. In this case, the water supplying channel module 5 may be directly connected to a faucet or be connected to the faucet through a separate connection hose, to guide the water to the main channel 4.

The beverage maker may not include the water tank 51 and the water supplying pump 52, and may include the water supplying heater 53. In this case, the water supplying channel module 5 may be directly connected to the faucet or be connected to the faucet through the separate connection hose, to guide the water to the main channel 4, and the water supplying heater 53 may heat the water passing through the water supplying channel module 5.

The beverage discharging channel module 6 may be connected to the main channel 4. The beverage discharging channel module 6 may include the beverage discharging channel 61 which is connected to the main channel 4 and to which the beverage of the main channel 4 is guided. The beverage discharging channel module 6 may further include a dispenser 62 connected to the beverage discharging channel 61.

The beverage discharging channel 61 may be connected between the water supplying channel module 5 and the fermentation module 1 in the main channel 4. The beverage discharging channel 61 may be connected between the material supplier 3 and the fermentation module 1 in the main channel 4. The beverage discharging channel 61 may be connected to the second main channel 4B.

An anti-foaming portion 63 may be provided in the beverage discharging channel 61, and foam of the beverage flowing from the main channel 4 to the beverage discharging channel 61 may be minimized while passing through an anti-forming path. A mesh and the like by which the foam is filtered may be provided in the anti-foaming portion 63.

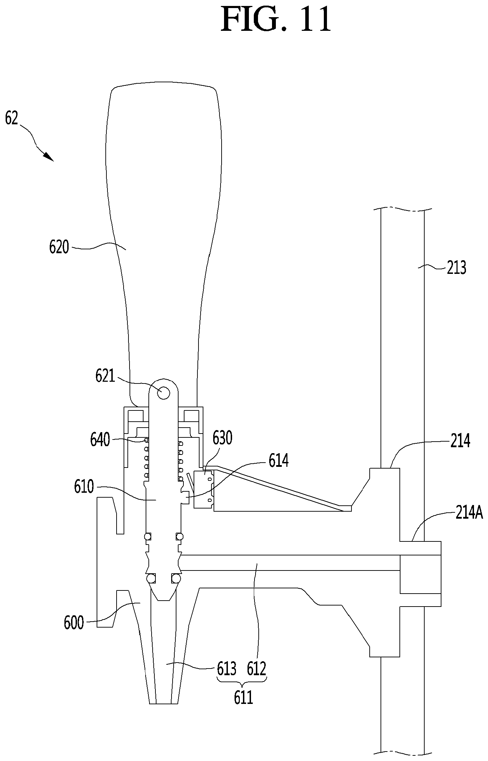

The dispenser 62 may include a tap valve having a lever 620 that the user manipulates and a limit switch 630 (a micro switch, see FIG. 11) configured to detect the manipulation of the user.

The gas discharging channel module 7 may include a gas discharging channel 71 connected to the fermentation module 1, a pressure sensor 72 installed in the gas discharging channel 71, and a gas discharging valve 73 connected to the gas discharging channel 71 after the pressure sensor 72 in a gas discharging direction.

The gas discharging channel 71 may be connected to the fermentation module 1, particularly, the fermentation lid 107. A gas discharging channel connector 121 to which the gas discharging channel 71 is connected may be provided in the fermentation module 1. The gas discharging channel connector 121 may be provided in the fermentation lid 107.

Gas in the fermentation container 12 may flow to the gas discharging channel 71 and the pressure sensor 72 through the gas discharging channel connector 121. The pressure sensor 72 may detect the pressure of the gas discharged from the fermentation container 12 via the gas discharging channel connector 121 to the gas discharging channel 71.

The gas discharging valve 73 may be switched on and opened when the air is injected into the fermentation container 12 by the air injection channel module 8. The beverage maker may inject the air into the fermentation container 12 to evenly mix the malt and the water. At this time, the foam generated in the liquid malt may be discharged from an upper portion of the fermentation container 12 via the gas discharging channel 71 and the gas discharging valve 73 to the outside.

The gas discharging valve 73 may be switched on and opened to detect a degree of fermentation during a fermentation process, and then may be switched off and closed.

The gas discharging channel module 7 may further include a gas discharging relief valve 75 connected to the gas discharging channel 71. The gas discharging relief valve 75 may be connected to the gas discharging channel 71 after the pressure sensor 72 in the gas discharging direction.

The air injection channel module 8 may be connected to the main channel 4 to inject the air into the main channel 4.

The air injection channel module 8 may be connected before the material supplier 3 in a water flowing direction, and in this case, may inject the air into the material supplier 3 through the main channel 4. The air injection channel module 8 may be connected to the first main channel 4A. The air injected from the air injection channel module 8 to the main channel 4 may be injected into the fermentation container 12 after passing through the material supplier 3. The air injected from the air injection channel module 8 to the main channel 4 may bypass the material supplier 3 to be injected into the fermentation container 12.

The air injection channel module 8 may inject the air into the capsule accommodating portions 31, 32, and 33 through the main channel 4, and residual water or dregs in the capsules C1, C2, and C3 or the capsule accommodating portions 31, 32, and 33 may flow to the main channel 4 by the air injected by the air injection channel module 8. The capsules C1, C2, and C3 and the capsule accommodating portions 31, 32, and 33 may be maintained clean by the air injected by the air injection channel module 8.

The air injection channel module 8 may include the air injection channel 81 connecting the air injection pump 82 and the main channel 4. The air injection pump 82 may pump the air to the air injection channel 81.

The air injection channel 81 may be connected between the water supplying channel module 5 and the material supplier 3 in the water flowing direction. The air injection channel 81 may be connected to the first main channel 4A of the main channel 4.

The air injection channel module 8 may further include an air injection check valve 83 configured to prevent the water guided to the main channel 4 from being introduced into the air injection pump 82 through the air injection channel 81. The air injection check valve 83 may be installed after the air injection pump 82 in an air injecting direction.

In order to improve an output of the air injection pump 82, the air injection pump 82 may include a plurality of air pumps connected to parallel to each other. In this case, the air injection channel 81 may include a common pipe connected to the main channel 4, and a plurality of joining pipes connecting the plurality of air pumps to the common pipe, respectively.

Meanwhile, the channel module 2 may include the main valve 9 configured to open/close the main channel 4. Also, the channel module 2 may further include a main check valve 94 installed in the main channel 4.

The main channel 4 may include a first connector 91 connected to the beverage discharging channel 61, and a second connector connected to the main channel connector 115 formed in the fermentation module 1. Also, the main channel 4 may further include a third connector 93 connected to the material supplier outlet channels 302, 312, 322, and 332.

The main valve 9 may be installed between the first connector 91 and the second connector 92.

The main check valve 94 may be installed between the first connector 91 and the third connector 93. The main check valve 94 may be installed in a direction in which the water, the air, or a mixture thereof may flow from the third connector 93 to the first connector 91.

When the water is supplied to the fermentation container 12, the main valve 9 may be opened to open the main channel 4. While the fermentation tank 112 is cooled, the main valve 9 may be closed to close the main channel 4. When the air is injected into the fermentation container 12, the main valve 9 may be opened to open the main channel 4. When the additives are supplied into the fermentation container 12, the main valve 9 may be opened to open the main channel 4. While the materials are fermented, the main valve 9 is closed to seal the inside of the fermentation container 12. When the beverage is matured and stored, the main valve 9 may be closed to seal the inside of the fermentation container 12. When the beverage is discharged by the beverage discharging channel module 6, the main valve 9 may be opened to open the main channel 4, and the beverage inside the fermentation container 12 may pass through the main valve 9 to flow to the beverage discharging channel 61.

When the beverage is discharged by the beverage discharging channel module 6, the main check valve 94 may prevent the beverage passing through the main valve 9 from flowing backward to the material supplier 3.

Meanwhile, the beverage maker may include the air controlling channel module 15 configured to supply the air into the fermentation tank 112 or discharge the air inside the fermentation tank 112.

The air controlling channel module 15 may supply the air to a space between the fermentation container 12 and the inner wall of the fermentation tank 112 or, in contrast, may discharge the air between the fermentation container 12 and the inner wall of the fermentation tank 112 to the outside.

The air controlling channel module 15 may include an air supplying channel 154 connected to the fermentation module 1, and an air discharging valve 156 connected to the air supplying channel 154 to discharge the air to the outside.

The air supplying channel 154 may have one end connected to the fermentation module 1, and the other end connected to the air injection channel 81.

The air supplying channel 154 may be connected to the fermentation module 1, particularly, the fermentation lid 107. An air supplying channel connector 117 to which the air supplying channel 154 is connected may be provided in the fermentation module 1. The air supplying channel connector 117 may be provided in the fermentation case 160.

The air supplying channel 154 may be connected to the air injection channel 81 of the air injection channel module 8. A connector 81a between the air supplying channel 154 and the air injection channel 81 may be located after the air injection check valve 83 along a flow direction of the air passing through the air injection channel 81.

In this case, the air pumped by the air injection pump 82 may sequentially pass through the air injection channel 81 and the air supplying channel 154, to be guided to the space between the fermentation container 12 and the inner wall of the fermentation tank 112. The air injection pump 82 and the air supplying channel 154 may function as an air supplier configured to supply the air to the space between the fermentation container 12 and the fermentation tank 112.

On the other hand, a separate air supplying pump may be connected to the air controlling channel module 15. In this case, the air supplying channel 154 may be connected to the air supplying pump without being connected to the air injection channel 81. However, as described above, it is more preferable in terms of cost reduction that the air injecting pump 82 is configured both to inject the air into the fermentation container 12 and to supply the air to the space between the fermentation container 12 and the fermentation tank 112.

The air supplying channel 154 and the air discharging valve 156 may function as an air discharging passage configured to discharge the air between the fermentation container 12 and the fermentation tank 112 to the outside.

The air supplying channel 154 may be connected to the fermentation module 1 to supply the air to the space between the fermentation tank 112 and the fermentation container 12.

The air supplying channel 154 may have one end connected to the air injection channel 81 and the other end connected to the fermentation module 1.

In a state in which the fermentation container 12 is accommodated in the fermentation tank module 111, the air injection pump 82 and the air supplying channel 154 may supply the air to the space between the fermentation container 12 and the fermentation tank 112. In this way, the air supplied into the fermentation tank 112 may press the fermentation container 12 between the fermentation container 12 and the fermentation tank 112.

The beverage in the fermentation container 12 may be pressurized by the fermentation container 12 pressed by the air, and when the main valve 9 and the dispenser 62 are opened, may pass through the main channel connector 115 to flow to the main channel 4. The beverage flowing from the fermentation container 12 to the main channel 4 may be discharged to the outside through the beverage discharging channel module 6.

When the beverage is completely produced, the beverage maker may discharge the beverage inside the fermentation container 12 to the beverage discharging channel module 6 in a state in which the fermentation container 12 is located inside the fermentation module 1 without being extracted to the outside of the fermentation module 1.

The air injection pump 82 may supply the air to form a predetermined pressure between the fermentation container 12 and the fermentation tank 112, and a pressure by which the beverage inside the fermentation container 12 is easily discharged may be formed between the fermentation container 12 and the fermentation tank 112.

The air injection pump 82 may maintain an OFF state while the beverage is discharged, and may be driven or then stopped for next discharging of the beverage when the beverage is completely discharged.

The air discharging valve 156 may be located outside the fermentation module 1. The air discharging valve 156 may be connected to a portion of the air supplying channel 154, which is located outside the fermentation tank 112.

The air controlling channel module 15 may further include an air discharging channel 157 connecting the air discharging valve 156 and the air supplying channel 154.

The air supplying channel 154 may include a first channel extending from the connector 81a connected to the air injection channel 81 to a connector 154F connected to the air discharging channel 157 and a second channel extending from the connector 154F connected to the air discharging channel 157 to the air supplying channel connector 117. The first channel may be an air supplying channel configured to guide the air pumped by the air injection pump 82 to the second channel. Further, the second channel may an air supplying and discharging-combined channel configured to supply the air passing through the air supplying channel to the space between the fermentation tank 112 and the fermentation container 12 or to guide the air discharged from the space between the fermentation tank 112 and the fermentation container 12 to the air discharging channel 157.

When the fermentation container 12 is expanded while the beverage is produced, the air discharging valve 156 may be opened such that the air between the fermentation container 12 and the fermentation tank 112 is discharged to the outside. The air discharging valve 156 may be controlled to be opened when the water is supplied by the water supplying channel module 5. The air discharging valve 156 may be controlled to be opened when the air is injected by the air injection channel module 8.

When the beverage inside the fermentation container 12 is completely discharged, the air discharging valve 156 may be opened such that the air between the fermentation container 12 and the fermentation tank 112 is extracted to the outside. The user may extract the fermentation container 12 to the outside of the fermentation tank 112 after the beverage is completely discharged. This is because a safety accident may occur when the inside of the fermentation tank 112 may be maintained in a high pressure. The air discharging valve 156 may be controlled to be opened when the beverage inside the fermentation container 12 is completely discharged.

The air controlling channel module 15 may further include an air relief valve 158 connected between the connector 154F between the air supplying channel 154 and the air discharging channel 157 and the fermentation module 1.

The air controlling channel module 15 may further include an air supplying opening/closing valve 159 configured to regulate the air pumped by the air injection pump 82 and supplied to the space between the fermentation container 12 and the fermentation tank 112.

The air supplying opening/closing valve 159 may be installed in the air supplying channel 154. In more detail, the air supplying opening/closing valve 159 may be installed between the connector 81a of the air injection channel 81 and the connector 154F of the air discharging channel 157 in the air supplying channel 154.

The air controlling channel module 15 may further include an air supplying check valve 155 installed in the air supplying channel 154.

The air supplying check valve 155 may be installed between the connector 81a of the air injection channel 81 and the connector 154F of the air discharging channel 157 in the air supplying channel 154. The air supplying check valve 155 may be arranged after the air supplying opening/closing valve 159 along the flow direction of the air guided from the air injection channel 81 to the air supplying channel 154.

The air supplying check valve 155 may prevent the air from flowing to the air injection channel 81 when the air between the fermentation container 12 and the fermentation tank 112 is discharged.

Meanwhile, the channel module 2 may further include a channel switching valve 20 installed in the main channel 4.

The channel switching valve 20 may be a four-way valve. The channel switching valve 20 may be arranged before the material supplier 3 with respect to a flow direction of the water flowing in the water supplying channel module 5 or the air injected from the air injection channel module 8.

The channel switching valve 20 may be installed in a connector of the first main channel 4A and the bypass channel 4C of the main channel 4. The air injection channel 81 and the material supplier inlet channels 301, 311, 321, and 331 may be connected to the channel switching valve 20.

The channel switching valve 20 may allow the first main channel 4A to communicate with the bypass channel 4C or the material supplier inlet channels 301, 311, 321, and 331. Also, the channel switching valve 20 may allow the air injection channel 81 to communicate with the material supplier inlet channels 301, 311, 321, and 331 or the bypass channel 4C.

When the channel switching valve 20 allows the first main channel 4A to communicate with the material supplier inlet channels 301, 311, 321, and 331, the water supplied from the water supplying channel module 5 may be guided to the material supplier 3, and may pass through the capsule accommodating portions 31, 32, and 33 to flow to the second main channel 4B.

When the channel switching valve 20 allows the first main channel 4A to communicate with the bypass channel 4C, the water supplied from the water supplying channel module 5 may be guided to the bypass channel 4C, and may bypass the material supplier 3 to flow to the second main channel 4B.

When the channel switching valve 20 allows the air injection channel 81 to communicate with the material supplier inlet channels 301, 311, 321, and 331, the air injected from the air injection channel module 8 may be guided to the material supplier 3, and may pass through the capsule accommodating portions 31, 32, and 33 to flow to the second main channel 4B.

When the channel switching valve 20 allows the air injection channel 81 to communicate with the bypass channel 4C, the air injected from the air injection channel module 8 may be guided to the bypass channel 4C, and may bypass the material supplier 3 to flow to the second main channel 4B.

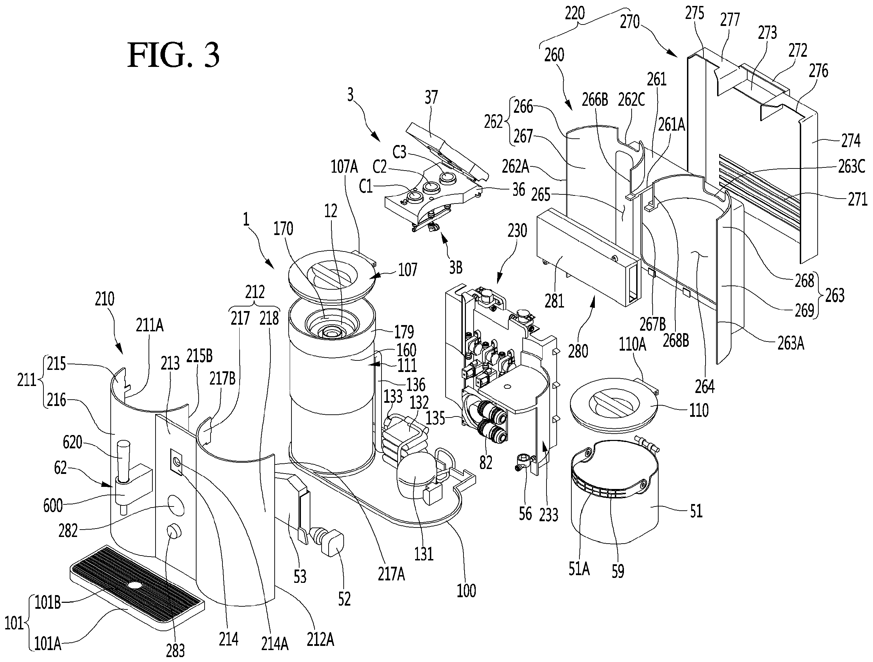

A temperature sensor 16 configured to measure the temperature of the fermentation tank 112 may be provided in the fermentation tank 112. The temperature sensor 16 may measure the temperature of the fermentation tank 112, to transmit a temperature value to a control module 280 (see FIG. 3), which will be described below.

The temperature sensor 16 may be fastened to a protrusion protruding downward from the bottom surface of the fermentation tank 112.

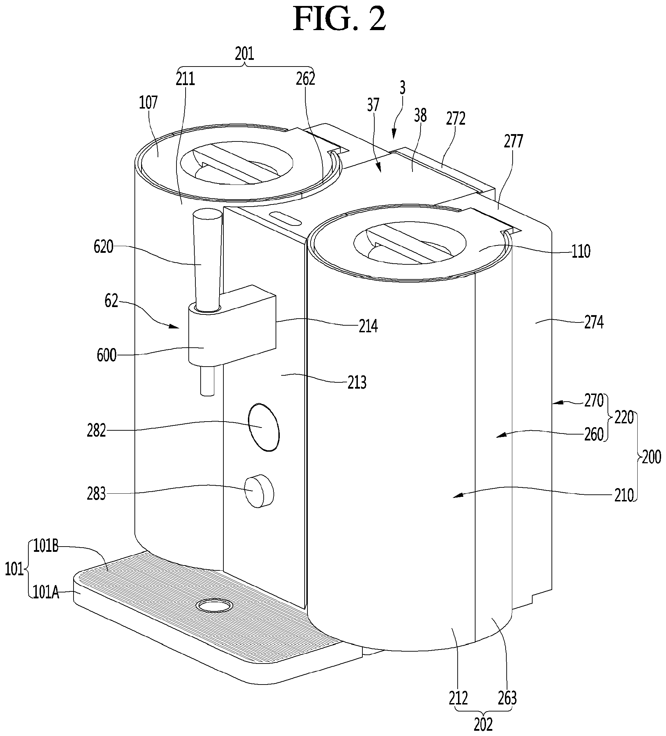

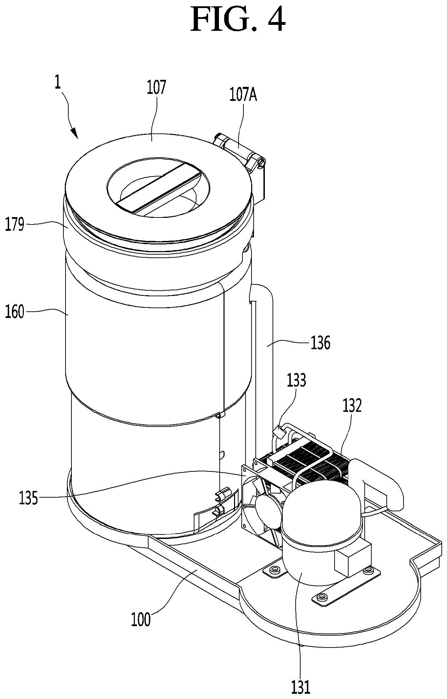

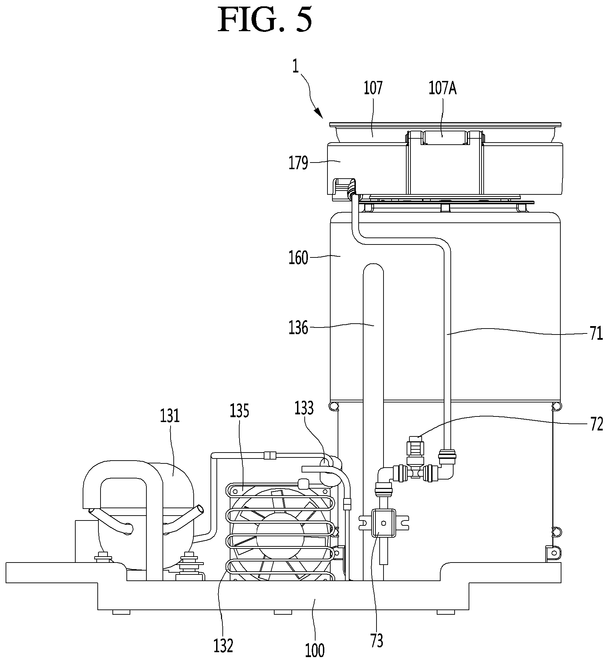

FIG. 2 is a perspective view illustrating the beverage maker according to the embodiment of the present disclosure, FIG. 3 is an exploded perspective view illustrating the beverage maker of FIG. 2, FIG. 4 is a perspective view illustrating a state in which a refrigeration cycle device and a fermentation module are mounted on a base according to the embodiment of the present disclosure, and FIG. 5 is a rear view illustrating a state in which the refrigeration cycle device and the fermentation module are mounted on the base according to the embodiment of the present disclosure.

The beverage maker may include a base 100. The base 100 may constitute the outer appearance of the bottom surface of the beverage maker, and may support the fermentation module 1, the refrigeration cycle device 13, the water supplying heater 53, the water supplying pump 52, a main frame 230, and the like, which are located thereon.

The beverage maker may further include a beverage container 101 that may receive and store the beverage dropped from the dispenser 62. The beverage container 101 may be formed integrally with the base 100 or may be coupled to the base 100.

The beverage container 101 may include a container body 101A having a space formed therein in which the beverage dropped from the dispenser 62 is accommodated. The beverage container 101 may include a container top plate 101B arranged on the upper surface of the container body 101A to cover an internal space of the container body 100A.

The container body 101A may protrude forward from a front portion of the base 100. The upper surface of the container body 101A may be opened.

A plurality of holes through which the beverage is dropped into the container body 101A may be formed in the container top plate 101B.

A beverage dropped around a beverage container (not illustrated) among the beverage dropped from the dispenser 62 may be dropped onto the container top plate 101B, and may be temporarily stored inside the beverage container 101 through a hole of the container top plate 101B, and a vicinity of the beverage maker may be maintained clean.

The fermentation module 1 may have an approximately cylindrical shape. The fermentation module 1 may be supported from the lower side by the base 100.

The fermentation module 1 may be arranged in the base 100. At this time, the fermentation module 1 may be directly seated and arranged in the base 100, and may be supported by a separate fermentation module supporter (not illustrated) seated on the base 100 and be arranged in the base 100.

The fermentation module 1 includes the fermentation tank module 111 having the opening 170 formed therein, and the fermentation lid 107 configured to cover the opening 170. As described above, the fermentation container 12 may be arranged inside the fermentation tank module 111.

The fermentation tank 112 may be accommodated inside the fermentation case 160. The insulation portion 171 may be located between the fermentation tank 112 and the fermentation case 160 to insulate the fermentation tank 112. At this time, the evaporator 134 (see FIG. 1) and/or the heater 14 (see FIG. 1) wound on the fermentation tank 112 may be located between the insulation portion 171 and the fermentation tank 112. That is, the insulation portion 171 may surround the evaporator 134 and/or the heater 14 together with the fermentation 112, thereby facilitating control of the temperature of the fermentation tank 112.

The fermentation lid 107 may be arranged above the fermentation tank module 111, and may open/close the opening 170 of the fermentation tank module 111 on the upper side thereof.

The fermentation tank module 111 may further include the lid seated body 179 on which the fermentation lid 107 is seated. The lid seated body 179 may be arranged above the fermentation case 160, and may support the fermentation lid 107 on the lower side thereof.

The fermentation case 160 may constitute a partial outer appearance of a lower portion of the fermentation module 1, and the fermentation lid 107 may constitute a partial outer appearance of an upper portion of the fermentation module 1.

The fermentation case 160 may be seated on the base 100.

The fermentation lid 107 may be detachably, slidably, or rotatably connected to the fermentation tank module 111. For example, the fermentation lid 107 may be hinge-connected to the lid seated body 179.

A first hinge connector 107A protruding rearward may be provided in the fermentation lid 107, and the first hinge connector 107A may be hinge-connected to the lid seated body 179.

Meanwhile, the water tank 51 may be arranged above the base 100, and may be spaced apart from the base 100. The water tank 51 may be vertically spaced apart from the base 100 by a water tank supporter 233, which will be described below.

The water tank 51 may be transversely spaced apart from the fermentation module 1. In more detail, the water tank 51 and the fermentation module 1 may be spaced apart from each other in a left-right direction.

The upper surface of the water tank 51 may be opened. The front surface and the rear surface of the water tank 51 may be a transversely rounded curved surface, and opposite surfaces of the water tank 51 may be a flat surface. At this time, a curvature of the front surface and the rear surface of the water tank 51 may be the same as a curvature of an outer circumferential surface of the fermentation module 1.

However, the present disclosure is limited thereto, and the shape of the water tank 51 may change as needed. For example, the upper surface of the water tank 51 may be formed in a top-opened hollow cylindrical shape.

A water tank handle 59 may be provided in the water tank 51. The water tank handle 59 may be rotatably connected to the water tank 51. In more detail, opposite ends of the water tank handle 59 may be hinge-connected to the opposite surfaces of the water tank 51.

In a state in which the water tank handle 59 is rotated upward, the user may lift up the water tank 51 while holding the water tank handle 59.

A stepped portion 51a may be formed at an upper end of the water tank 51. The stepped portion 51a may be a portion having a lower height than the other upper end as a part of the upper end of the water tank 51 is stepped. The stepped portion 51a may be formed as a part of a front portion of the upper end of the water tank 51 is stepped.

The water tank handle 59 may be provided to be in contact with the stepped portion 51a. At this time, the width of the water tank handle 59 may be the same as the step height of the stepped portion 51a. Further, the water tank handle 59 may include a bent portion formed to be bent, and the curvature of the bent portion may be the same as the curvature of the front surface of the water tank 51.

The beverage maker may further include a water tank lid 110 covering the opened upper surface of the water tank 51. The water tank lid 110 may open/close an inner space of the water tank 51.

The water tank lid 110 may be rotatably connected to the water tank 51.

A second hinge connector 110A protruding rearward may be provided in the water tank lid 110, and the second hinge connector 110A may be hinge-connected to the water tank 51.

The water tank lid 110 may be formed to have the same shape as that of the fermentation lid 107. Accordingly, the beverage maker may have a sense of unity in terms of design, and the same component may be advantageously utilized as the water tank lid 110 and the fermentation lid 107.

A height between the base 100 and the fermentation lid 107 may be the same as a height between the base 100 and the water tank lid 110. In more detail, a height between the base 100 and the upper surface of the fermentation lid 107 may be the same as a height between the base 100 and the upper surface of the water tank lid 110.

Meanwhile, the beverage maker may further include an outer case 200.

The outer case 200 may be seated on the base 100.

The outer case 200 may define an outer appearance of the beverage maker.

The outer case 200 may include a fermentation module cover 201 covering the fermentation module 1 and a water tank cover 202 covering the water tank 51. The fermentation module cover 201 and the water tank cover 202 may have a hollow cylindrical shape. Parts of the circumferential surfaces of the fermentation module cover 201 and the water tank cover 202 may be opened.

At least parts of the outer circumferences of the fermentation module 1 and the water tank 51 may be surrounded. That is, the fermentation module 1 may be arranged inside the fermentation module cover 201, and the water tank 51 may be arranged inside the water tank cover 202.

The fermentation module cover 201 and the water tank cover 51 may fix the fermentation module 1 and the water tank 51, and may protect the fermentation module 1 and the water tank 51 from external impacts.

The curvature of the fermentation module cover 201 may be the same as that of the outer circumference of the fermentation module 1, and the curvature of the water tank cover 202 may be the same as the curvature of the front surface and the rear surface of the water tank 51.

The height of the fermentation module cover 201 may be larger than the height of the fermentation case 160. It is preferable that the height of the fermentation module cover 201 may be the same as that of the fermentation case 1.

The fermentation module cover 201 and the water tank cover 202 may be transversely spaced apart from each other.

The heights and/or the diameters of the fermentation module cover 201 and the water tank cover 202 may be equal to each other. Accordingly, the outer appearance of the beverage maker may be improved in terms of design because of a symmetric structure and a sense of unity. Detailed configurations of the fermentation module cover 201 and the water tank cover 202 will be described below in detail.

At least one of the main frame 230, the water supplying pump 52, the water supplying heater 53, the air injection pump 82, and the temperature controller 11 may be accommodated in the outer case 200. Also, at least a part of the channel module 2 may be located inside the outer case 200.

The outer case 200 may be configured by coupling a plurality of members. The outer case 200 may include a front cover 210 and a rear cover 220.

The front cover 210 may be arranged in front of the fermentation module 1, the water tank 51, and the main frame 230, and the rear cover 220 is arranged behind the fermentation module 1, and thus may be arranged behind the water tank 51, and the main frame 230.

The front cover 210 may constitute a partial outer appearance of a front portion of the beverage maker.

The dispenser 62 may be mounted on the front cover 210. The dispenser 62 may be arranged to be closer to an upper end than a lower end of the front cover 210. The dispenser 62 may be located above the beverage container 101. The user may discharge the beverage by opening the dispenser 62.

The front cover 210 may be configured by coupling a plurality of members.

The front cover 210 may include a front fermentation module cover 211, a front water tank cover 212, and a center cover 213.

The front fermentation module cover 211 may cover a part of a front portion of the outer circumference of the fermentation module 1. The front fermentation module cover 211 may correspond to a part of a front portion of the fermentation module cover 201.

The front fermentation module cover 211 may include an upper front fermentation module cover 215 and a lower front fermentation module cover 216.

The upper front fermentation module cover 215 and the lower front fermentation module cover 216 may be formed integrally.

The upper front fermentation module cover 215 may cover a part of a front portion of an outer circumference of the fermentation lid 107, and the lower front fermentation module cover 216 may cover a part of a front portion of an outer circumference of the fermentation case 160.

The circumferential length of the upper front fermentation module cover 215 may be larger than the circumferential length of the lower front fermentation module cover 216.

In more detail, an outer end of the lower front fermentation module cover 216 and an outer end of the upper front fermentation module cover 215 may coincide with each other with respect to the circumferential direction of the front fermentation module cover 211. The outer end of the lower front fermentation module cover 216 and the outer end of the upper front fermentation module cover 215 together may form an outer end 211A of the front fermentation module cover 211.

A front-rear distance between an inner end of the lower front fermentation module cover 216 and the center cover 213 may be smaller than a front-rear distance between an inner end 215B of the upper front fermentation module cover 215 and the center cover 213.

The front fermentation module cover 211 may constitute the fermentation module cover 201 together with a rear fermentation module cover 262 of the rear cover 220. That is, the fermentation module cover 201 may include the front fermentation module cover 211 and the rear fermentation module cover 262. The front fermentation module cover 211 and the rear fermentation module cover 262 may be fastened to each other.

The rear fermentation module cover 262 may cover a part of a rear portion of the fermentation module 1. The rear fermentation module cover 262 may correspond to a part of a rear portion of the fermentation module cover 201. The rear fermentation module cover 262 may be located behind the front fermentation module cover 211.

The rear fermentation module cover 262 may include an upper rear fermentation module cover 266 and a lower rear fermentation module cover 267.

The upper rear fermentation module cover 266 and the lower rear fermentation module cover 267 may be formed integrally.

The upper rear fermentation module cover 266 may cover a part of a rear portion of the outer circumference of the fermentation lid 107, and the lower rear fermentation module cover 267 may cover a part of a rear portion of the outer circumference of the fermentation case 160.

The circumferential length of the upper rear fermentation module cover 266 may be larger than the circumferential length of the lower rear fermentation module cover 267.

An outer end of the lower rear fermentation module cover 267 and an outer end of the upper rear fermentation module cover 266 may coincide with each other with respect to the circumferential direction of the rear fermentation module cover 262. The outer end of the lower rear fermentation module cover 267 and the outer end of the upper rear fermentation module cover 266 together may form an outer end 262A of the rear fermentation module cover 262.

The outer end 262A of the rear fermentation module cover 262 may be in contact with the outer end 211A of the front fermentation module cover 211.

An inner end 262B of the upper rear fermentation module cover 266 may be in contact with an inner end 215B of the upper front fermentation module cover 215. On the other hand, an inner end 267B of the lower rear fermentation module cover 267 may be spaced apart from the inner end of the lower front fermentation module cover 216.

Meanwhile, the front water tank cover 212 may cover the front surface of the water tank 51. The front water tank cover 212 may correspond to a part of a front portion of the water tank cover 202.

The front water tank cover 212 may include an upper front water tank cover 217 and a lower front water tank cover 218.

The upper front water tank cover 217 and the lower front water tank cover 218 may be formed integrally.

The upper front water tank cover 217 may cover a part of an upper portion of the front surface of the water tank 51 and the water tank handle 59. The lower front water tank cover 218 may cover a part of a lower portion of the front surface of the water tank 51.

The circumferential length of the upper front water tank cover 217 may be larger than the circumferential length of the lower front water tank cover 218.

An outer end of the lower front water tank cover 218 and an outer end of the upper front water tank cover 217 may coincide with each other with respect to the circumferential direction of the front water tank cover 212. The outer end of the lower front water tank cover 218 and the outer end of the upper front water tank cover 217 together may form an outer end 212A of the front water tank cover 212.

A front-rear distance between an inner end of the lower front water tank cover 218 and the center cover 213 may be smaller than a front-rear distance between an inner end 217B of the upper front water tank cover 217 and the center cover 213.

The front water tank cover 212 may constitute the water tank cover 202 together with a rear water tank cover 263 of the rear cover 220. That is, the water tank cover 202 may include the front water tank cover 212 and the rear water tank cover 263. The front water tank cover 212 and the rear water tank cover 263 may be fastened to each other.

The rear water tank cover 263 may cover a part of a rear portion of the outer circumference of the water tank 51. The rear water tank cover 263 may be located behind the front water tank cover 212.

The rear water tank cover 263 may include an upper rear water tank cover 268 and a lower rear water tank cover 269.

The upper rear water tank cover 268 and the lower rear water tank cover 269 may be formed integrally.

The upper rear water tank cover 268 may cover a part of an upper portion of the rear surface of the water tank 51, and the lower rear water tank cover 269 may cover a part of a lower portion of the rear surface of the water tank 51.

The circumferential length of the upper rear water tank cover 268 may be larger than the circumferential length of the lower rear water tank cover 269.

An outer end of the lower rear water tank cover 267 and an outer end of the upper rear water tank cover 268 may coincide with each other with respect to the circumferential direction of the rear water tank cover 263. The outer end of the lower rear water tank cover 267 and the outer end of the upper rear water tank cover 268 together may form an outer end 263A of the rear water tank cover 263.

The outer end 263A of the rear water tank cover 263 may be in contact with the outer end 212A of the front water tank cover 212.

An inner end 268B of the upper rear water tank cover 268 may be in contact with an inner end 217B of the upper front water tank cover 217. On the other hand, an inner end of the lower rear water tank cover 269 may be spaced apart from an inner end of the lower front water tank cover 218.

Meanwhile, the center cover 213 may be arranged between the front fermentation module cover 211 and the front water tank cover 212. Opposite ends of the center cover 213 may be in contact with the front fermentation module cover 211 and the front water tank cover 212, respectively.

The center cover 213 may have a vertically arranged flat plate shape.

The height of the center cover 213 may be the same as the heights of the front fermentation module cover 211 and the front water tank cover 212.

A discharge valve mounted portion 214 on which the dispenser 62 is mounted may be formed in the center cover 213.

A valve body 600 of the dispenser 62 may be mounted on the discharge valve mounted portion 214. The discharge valve mounted portion 214 may be formed as a part of the front surface of the center cover 213 is recessed rearward.

The discharge valve mounted portion 214 may be formed to be closer to an upper end than a lower end of the center cover 213.

A through-hole 214A opened in a front-rear direction may be formed in the discharge valve mounted portion 214. The beverage discharging channel 61 may pass through the through-hole 214A and may be connected to the dispenser 62.

The beverage maker may include a display 282 configured to display various kinds of information of the beverage maker. The display 282 may be arranged in the center cover 213.

It is preferable that the display 282 is formed at a portion of the center cover 213, which is not covered by the dispenser 62. That is, the display 282 may not transversely overlap with the dispenser 62.

The display 282 may include a display element such as a liquid crystal display (LCD), a light emitting diode (LED), and an organic light emitting diode (OLED). The display 282 may include a display printed circuit board (PCB) in which the display element is installed. The display PCB may be electrically connected to the control module 280, which will be described below.

The beverage maker may include an input unit configured to receive a command related to manufacturing of the beverage maker.

The input unit may include a rotary knob 283. The rotary knob 283 may be arranged in the center cover 213. The rotary knob 283 may be arranged below the display 282.

Also, the input unit may include a touch screen configured to receive a command of the user in a touch manner. The touch screen may be provided in the display 282.

The input unit may be electrically connected to the control module 280, which will be described below. Also, the user may input the command through a remote controller or a wireless communication device, and it is apparent that the control module 280 may receive the command of the user through a wireless communication element.

Meanwhile, the rear cover 220 is arranged behind the fermentation module 1, and may be arranged behind the water tank 51, and the main frame 230.

The rear cover 220 may be coupled to the front cover 210, and an inner space of the outer case 200 may be formed between the rear cover 220 and the front cover 210.

The rear cover 220 may be seated on the base 100, and may have the same height as the front cover 210.

The rear cover 220 may include a first rear cover 260 and a second rear cover 270.

The first rear cover 260 may be seated on the base 100, and the second rear cover 270 may be mounted on the first rear cover 260.

A cover through-hole 264 opened in a front-rear direction may be formed in the first rear cover 260. In more detail, the cover through-hole 264 opened in a front-rear direction may be formed in a cover body 261. The cover through-hole 264 may face the main frame 230 in a front-rear direction. Accordingly, the user may approach an inside of the beverage maker even while the first rear cover 260 is not separated.

The first rear cover 260 may include the cover body 261, the rear fermentation module cover 262, and the rear water tank cover 263. As described above, the rear fermentation module cover 262 may constitute the fermentation module cover 201 together with the front fermentation module cover 211, and the rear water tank cover 263 may constitute the water tank cover 202 together with the front water tank cover 212.

The rear fermentation module cover 262 and the rear water tank cover 263 may be mounted to be in contact with the cover body 261. At least a part of the cover body 261 may be located behind the rear fermentation module cover 262 and the rear water tank cover 263. The rear fermentation module cover 262 and the rear water tank cover 263 may be mounted on a front side of the cover body 261.

A fermentation module cover seated portion formed by rearward recessing a part of the upper surface of the cover body 261 may be provided in the cover body 261. The upper rear fermentation module cover 266 may be seated to be in contact with on an inner circumferential surface of the fermentation module cover seated portion.

Also, a water tank cover seated portion formed by rearward recessing a part of the upper surface of the cover body 261 may be formed in the cover body 261. The upper rear water tank cover 268 may be seated to be in contact with an inner circumferential surface of the water tank cover seated portion.

Hinge connector fitting grooves 262C and 263C may be formed at upper ends of the rear fermentation module cover 262 and the rear water tank cover 263, respectively. The first hinge connector 107A formed in the fermentation lid 107 may be fitted in and fixed to the first hinge connector fitting groove 262C formed in the rear fermentation module cover 262. The second hinge connector 110A formed in the water tank lid 110 may be fitted in and fixed to the second hinge connector fitting groove 263C formed in the rear water tank cover 263.

The heights of the upper rear fermentation module cover 266 and the upper rear water tank cover 268 may be the same as the height of the material supplier 3.

A pipe accommodating hole 265 may be formed in the rear fermentation module cover 262. The pipe accommodating hole 265 may extend vertically and may be opened in a front-rear direction.

A cooling pipe 136 may be connected to the fermentation module 1. A refrigerant channel constituting the refrigeration cycle device 13 (see FIG. 1) may be arranged in the cooling pipe 136. In more detail, the refrigerant channel connecting the expansion mechanism 133 and the evaporator 134 (see FIG. 1) may be arranged in the cooling pipe 136.

The cooling pipe 136 may be connected to a rear portion of the fermentation module 1. The cooling pipe 136 may be arranged in the pipe accommodating hole 265 formed in the rear fermentation module cover 262.

The cover body 261 may support the material supplier 3. At least a part of the material supplier 3 may be seated on the upper surface of the cover body 261, and the cover body 261 may support the material supplier 3 on the rear side thereof.

A material supplier outlet channel accommodating groove 261A may be formed in the cover body 261. The material supplier outlet channel accommodating groove 261A may be formed by rearward recessing a part of a front end of an upper portion of the cover body 261.

The material supplier outlet channel module 3B may be connected to a lower portion of the material supplier 3, and may extend to the inner space of the outer case 200 through the material supplier outlet channel accommodating groove 261A.

The second rear cover 270 may be mounted on a rear side of the first rear cover 260. The second rear cover 270 may cover at least a part of the cover through-hole 264 formed in the first rear cover 260.

The second rear cover 270 may be mounted on the cover body 261 of the first rear cover 260. The size of the second rear cover 270 may be larger than the size of the cover body 260. A side surface 274 of the second rear cover 270 may surround a side surface of the cover body 261 from the outside, and an upper surface 277 of the second rear cover 270 may be located above the upper surface of the cover body 261.

At least one through-hole 271 may be formed in the rear cover 220.

In more detail, the at least one through-hole 271 is formed in the second rear cover 270. The through-hole 271 may face the cover through-hole 265 formed in the first rear cover 260 in a front-rear direction.

The blower fan 135 may be arranged to face the cover through-hole 264 and the through-hole 271 in a front-rear direction, and the condenser 132 may be located between the blower fan 135 and the through-hole 271. Air heat-exchanged in the condenser 132 by the blower fan 135 may sequentially pass through the cover through-hole 264 and the through-hole 271, and may be discharged to the outside of the outer case 200.

Also, gas discharged through the gas discharging valve 73 (see FIG. 1) is discharged to the outside of the beverage maker through the through-hole 271.

At least one of a material supplier cover 272 and a material supplier support 273 may be formed in the second rear cover 270.

The material supplier cover 272 may be formed by rearward recessing a part of the front surface of the second rear cover 270. The material supplier cover 272 may cover the rear surface of the material supplier 3. Accordingly, as compared to a case where the material supplier cover 272 is not recessed, the beverage maker covering the rear surface of the material supplier 3 may become compact in a front-rear direction.

The material supplier support 273 may be formed by downward recessing a part of the upper surface of the second rear cover 270. The height of the material supplier support 273 may be the same as the height of the upper surface of the cover body 261.

A part of a rear portion of the material supplier 3 may be seated on the material supplier support 273, and the material supplier support 273 may support the material supplier 3 on the lower side thereof.

The material supplier cover 272 and the material supplier support 273 may form a material supplier accommodating portion together, and the part of the rear portion of the material supplier 3 may be arranged in the material supplier accommodating portion. A left-right width of the material supplier cover 272 and the material supplier support 273 may be the same as a left-right width of the material supplier 3.

At least one hinge connector accommodating groove 275 and 276 may be formed in the second rear cover 270. Preferably, a first hinge connector accommodating groove 275 in which the first hinge connector 107A is accommodated and a second hinge connector accommodating groove 276 in which the second hinge connector 110A is accommodated may be formed in the second rear cover 270.

The first hinge connector accommodating groove 275 may correspond to a first hinge connector fixing groove 262C formed in the rear fermentation module cover 262, and the second hinge connector accommodating groove 276 may correspond to a second hinge connector fixing groove 263C formed in the rear water tank cover 263.

Accordingly, as compared to a case where the hinge connector accommodating grooves 275 and 276 are not formed, the beverage maker may become compact in a front-rear direction.

Meanwhile, the material supplier 3 may be arranged between the fermentation module 1 and the water tank 51. Accordingly, the beverage maker may be manufactured more compactly as compared to a case where the material supplier 3 is not located between the fermentation module 1 and the water tank 51, and the material supplier 3 may be protected by the fermentation module 1 and the water tank 51.

The material supplier 3 may have one side which is in contact with the fermentation module 1 and the other side which is in contact with the water tank 51. At least parts of opposite surfaces of the material supplier 3 may be formed in a curved surface, and the curved surface may be in contact with an outer circumference of the fermentation module cover 201 and an outer circumference of the water tank cover 202.

The material supplier 3 may be arranged above the base 100 and may be vertically spaced apart from the base 100. Also, the material supplier 3 may be located above the main frame 230. That is, the main frame 230 may be vertically located between the base 100 and the material supplier 3.

The material supplier 3 may be located between the front cover 210 and the rear cover 220 in a front-rear direction. The front surface of the material supplier 3 may be covered by the center cover 213 of the front cover 210, and the rear surface of the material supplier 3 may be covered by the material supplier cover 272 of the second rear cover 270.

The material supplier 3 may be seated on the rear cover 220. The material supplier 3 may be supported by the cover body 261 of the first rear cover 261 and the material supplier support 273 of the second rear cover 270. At this time, the material supplier outlet channel module 3B connected to the material supplier 3 may be arranged to pass through the material supplier outlet channel accommodating groove 261A of the cover body 261.

The material supplier 3 may include a capsule accommodating body 36 having the capsule accommodating portions 31, 32, and 33 formed therein in which the capsules C1, C2, and C3 are detachably accommodated, and a lid module 37 covering the capsule accommodating portions 31, 32, and 33.

The capsule accommodating body 36 may be supported by the cover body 261 of the first rear cover 261 and the material supplier support 273 of the second rear cover 270.

The lid module 37 may include a lid 38 covering the capsule accommodating body 36. The lid 38 may be slidably arranged in or rotatably connected to the capsule accommodating body 36. The lid 38 may be hinge-connected to the capsule accommodating body 36.

The material supplier 3 may be installed at an approximately central upper portion of the beverage maker, and the user may easily mount and separate the capsules C1, C2, and C3 by upwardly rotating the lid module 37 of the material supplier 3.

Meanwhile, the beverage maker may include the main frame 230 on which at least a part of the channel module 2 is mounted.

The main frame 230 may be located between the front cover 210 and the rear cover 220 in a front-rear direction. At least a part of the main frame 230 may be located behind the fermentation module 1 and the water tank 51.

The main frame 230 may be positioned on the base 100. The main frame 230 may include the water tank supporter 233, and the water tank supporter 233 may space the water tank 51 apart from the base 100 in a vertical direction.

The main frame 230 may be located below the material supplier 3.

At least one of the water supplying pump 52, the water supplying heater 53, the blower fan 135, and the air injection pump 82 may be mounted on the main frame 230. Hereinafter, a case where the blower fan 135 and the air injection pump 82 are mounted on the main frame 230 will be described.

Also, the control module 280 may be mounted on the main frame 230.

At least a part of the main frame 230 may be located between the condenser 132 and the fermentation module 1, and the temperature of the fermentation module 1 may be prevented from increasing due to heat of the condenser 132.

Meanwhile, the water supplying heater 53, the water supplying pump 52, the compressor 131, and the condenser 132 may be mounted and supported on the base 100.

At least one of the water supplying heater 53 and the water supplying pump 52 may be arranged in front of the main frame 230.

The compressor 131 may be vertically arranged between the base 100 and the water tank 51. Also, the compressor 131 may be arranged between the water tank supporter 233 and the fermentation module 1 in a left-right direction.

The compressor 131 may be spaced apart from the fermentation module 1 in a left-right direction.

The front surface of the blower fan 135 may be directed between the fermentation module 1 and the compressor 131. Also, the rear surface of the blower fan 135 may be directed to the condenser 132. That is, the blower fan 135 may be arranged in front of the condenser 132.

The condenser 132 may face the blower fan 135 mounted on the main frame 230. The condenser 132 may be arranged behind the blower fan 135.

The condenser 132 may be arranged between the blower fan 135 and the through-hole 271 formed in the rear cover 220. That is, the through-hole 271 may be located behind the condenser 132.

Accordingly, the air may be suctioned to the front surface of the blower fan 135 through a space between the fermentation module 1 and the compressor 131, may be blown to the rear surface of the blower fan 135, and may be discharged to the through-hole 271 formed in the rear cover 220 through the condenser 132.

Also, at least a part of the blower fan 135 may be located between the fermentation module 1 and the compressor 131, and accordingly, the beverage maker may become compact in a front-rear direction.

Meanwhile, as described above, the gas discharging channel module 7 is connected to the fermentation module 1, and the gas discharging channel module 7 discharges gas inside the fermentation module 1. In more detail, the gas discharging channel 71 may be connected to the fermentation module 1, and gas may be discharged from the gas discharging valve 73 connected to the gas discharging channel 71.

The gas discharging valve 73 may be located behind the fermentation module 1. Accordingly, noise generated while the gas is discharged from the gas discharging valve 73 is blocked by the fermentation module 1, so that noise generated on a front side of the beverage maker may be reduced

Also, the gas discharged from the gas discharging valve 73 is discharged through the through-hole 271 formed in the rear cover 220. That is, both the air blown by the blower fan 135 and the gas discharged from the gas discharging valve 73 is discharged through the through-hole 271 formed in the rear cover 220.

The rear cover 220 may be a cover having the through-hole 271 formed therein through which the air blown by the blower fan 135 and the gas discharged from the gas discharging channel module 7 are discharged through the same surface. Accordingly, a structure of the beverage maker may become simple, and manufacturing costs may be reduced.

Meanwhile, the beverage maker may include the control module 280 configured to control the beverage maker.

The control module 280 may be an electronic device for the beverage maker. The control module 280 may be detachably mounted on the main frame 230.

The control module 280 may include a main PCB and a PCB case 281 in which the main PCB is embedded.

The control module 280 may further include a wireless communication device such as a remote controller or a portable terminal and a wireless communication element performing wireless communication. The wireless communication element may be installed without being limited to types as long as the wireless communication element may wirelessly communicate with the remote controller or the wireless communication device, which is like a Wi-Fi module and a Bluetooth module.

The control module 280 may receive the command input by the input unit. For example, the control module 280 may produce the beverage according to the command input by the rotary knob 283. Also, the control module 280 may output various kinds of information of the beverage maker to the display 282. For example, the control module 280 may display, through the display 282, information on an amount of the discharged beverage, a residual amount of the beverage, and whether the beverage is completely discharged.

The control module 280 may control at least one of the channel module 2, the water supplying pump 52, the water supplying heater 53, the air injection pump 82, and the temperature controller 11.

The control module 280 may be arranged in the main frame 230. The control module 280 may be fastened to a rear portion of the main frame 230.

The PCB case 281 may be fastened to the main frame 230, and may safely protect the main PCB therein.

At least a part of the control module 280 may be arranged to face the cover through-hole 264 formed in the first rear cover 260.

The control module 280 may detect the pressure inside the fermentation container 12 by the pressure sensor 72, and may detect the temperature of the fermentation tank 112 by the temperature sensor 16. The control module 280 may determine a degree to which the beverage is fermented, using the detected pressure or the detected temperature.

The control module 280 may detect the temperature of the water supplied from the water supplying channel module 5 to the main channel 4 by the thermistor 57, and may control the water supplying heater 53 according to the detected temperature of the water.

The control module 280 may control the temperature controller 1 to maintain the temperature of the fermentation tank 112 at a proper temperature.

The control module 280 may integrate at least one of a time for which the limit switch 630, which will be described below, is switched on, a time for which the air injection pump 82 is driven, and a time for which the main valve 9 is switched on after the beverage is completely produced. The control module 280 may calculate an amount of the beverage discharged from the fermentation container 12 according to the integrated time. The control module 280 may calculate the residual amount of the beverage based on the calculated amount of the discharged beverage. The control module 280 may determine whether all the beverage in the fermentation container 12 is discharged, based on information on the calculated residual amount of the beverage. When it is determined that all the beverage in the fermentation container 12 is discharged, the control module 280 may determine that the beverage is completely discharged.

In addition, the control module 280 may control an overall operation of the beverage maker. This will be described below in detail.

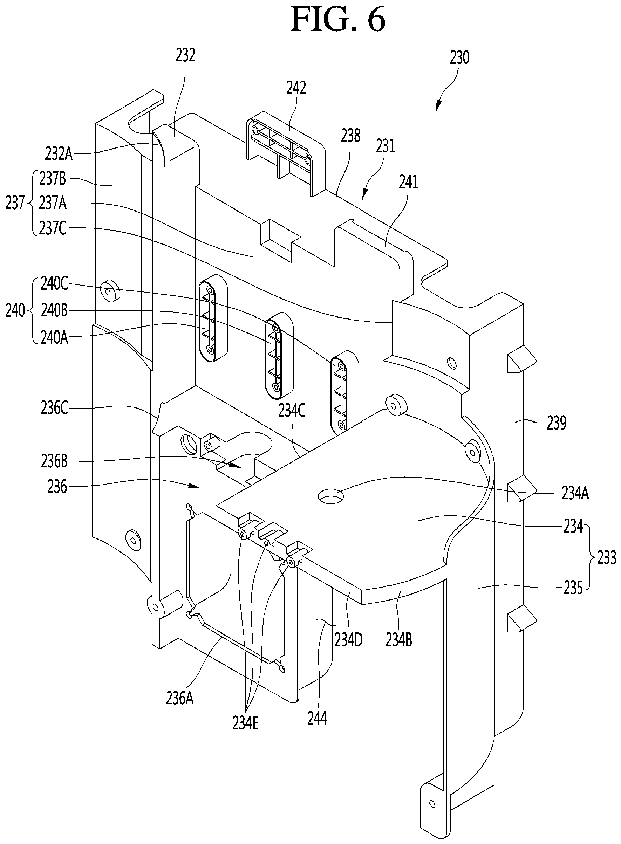

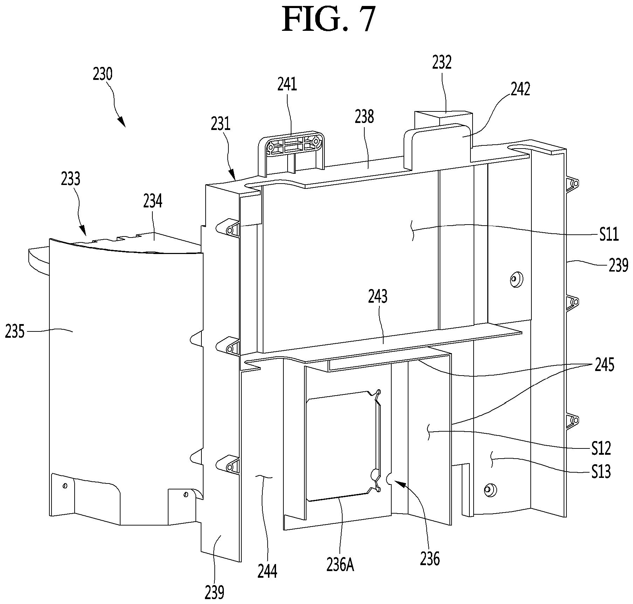

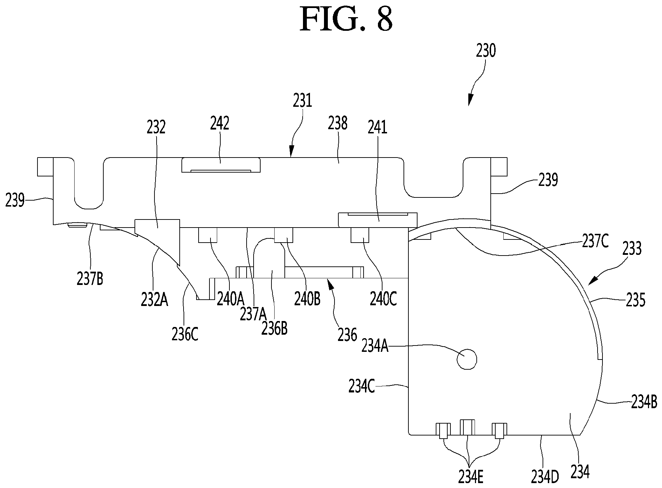

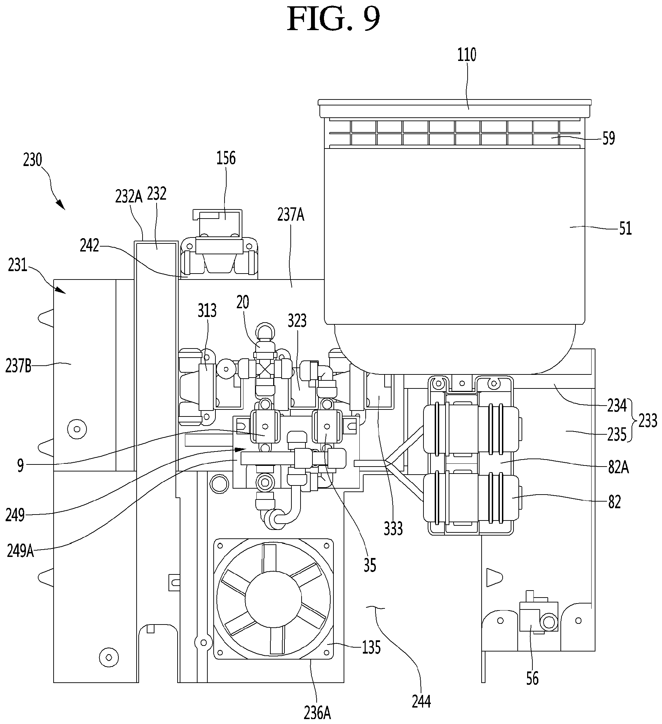

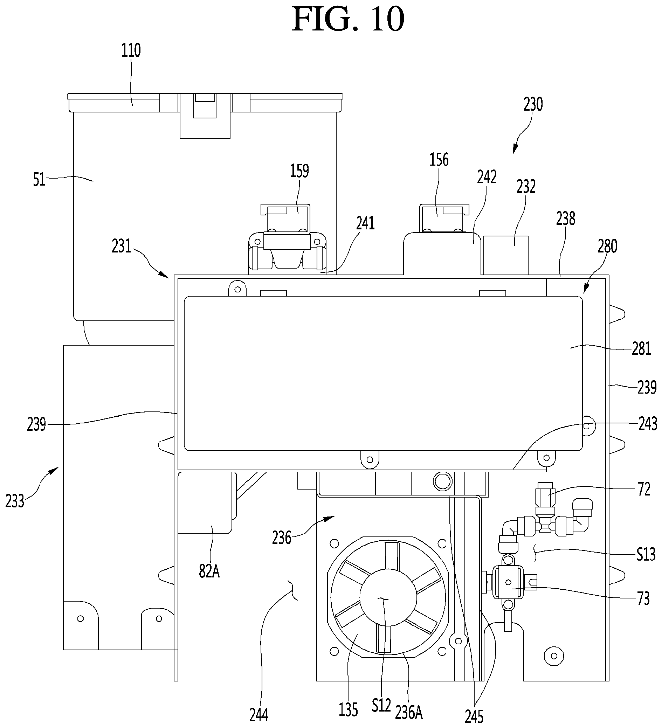

FIG. 6 is a perspective view illustrating a main frame according to the embodiment of the present disclosure, FIG. 7 is a perspective view illustrating the main frame of FIG. 6 when viewed in a different direction, FIG. 8 is a plan view illustrating the main frame of FIG. 6, FIG. 9 is a front view illustrating a case where a plurality of components are arranged in the main frame of FIG. 6, and FIG. 10 is a rear view illustrating a case where the plurality of components are arranged in the main frame of FIG. 6.

At least a part of the channel module 2 may be mounted on the main frame 230. The main frame 230 may be a channel module mounter.

Also, at least one of the air injection pump 82, the blower fan 135, the water supplying pump 52, and the water supplying heater 53 may be mounted on the main frame 230.

A holder mounted portion (not illustrated) on which a channel holder (not illustrated) configured to fix a channel or a line included in the channel module 2 is mounted may be formed in the main frame 230.

The control module 280 may be mounted on the main frame 230.

The main frame 230 may include a frame body 231.

The bottom surface and the rear surface of the frame body 231 may be formed to have an opened box shape.

The frame body 231 may be arranged vertically.

An opened portion 244 opened in a front-rear direction may be formed in the frame body 231. The opened portion 244 may be formed at a part of a lower portion of the frame body 231. The opened portion 244 may be formed beside a blower fan mounted portion 236, which will be described below. The opened portion 244 may be formed between the blower fan mounted portion 236 and the water tank supporter 233.

As compared to a case where the opened portion 244 is not formed, a space where various components arranged inside the outer case 200 may be arranged is enlarged, so that the beverage maker may become compact. Also, the refrigerant channel connecting the compressor 131 and the condenser 132 may be arranged to pass through the opened portion 244.

The main frame 230 may include a flat surface 237A on which the channel module 2 is mounted and curved surfaces 237B and 237C facing the fermentation module 1 and/or the water tank 51.

In more detail, a front surface 237 of the frame body 231 may include the flat surface 237A and the curved surfaces 237B and 237C. The curved surfaces 237B and 237C may face the fermentation module 1 and the water tank 51, respectively.

The flat surface 237A of the front surface 237 of the frame body 231 may be located between the pair of curved surfaces 237B and 237C. The channel module 2 may be mounted on the flat surface 237A. In more detail, valve mounted portions 240, 241, and 242 on which the opening/closing valves 313, 323, and 333 are mounted may be formed on the flat surface 237A.

The first curved surface 237B located on one side of the flat surface 237A may cover the fermentation module 1 in a front-rear direction, and may be formed to have the same curvature as the outer circumference of the fermentation module 1, more particularly, an outer circumference of a fermentation case 104. The second curved surface 237C located on the other side of the flat surface 237A may cover the water tank 51 in a front-rear direction, and may be formed to have the same curvature as the rear surface of the water tank 51. The beverage maker may become more compact in a front-rear direction due to the curved surfaces 237B and 237C.

The opened portion 244 may be formed below the flat surface 237A and/or the second curved surface 237C of the front surface 237 of the frame body 231.

The control module 280 may be arranged in the frame body 231. The control module 280 may be arranged inside the frame body 231. A control module accommodating space S11 in which the control module 280 is accommodated may be formed inside the frame body 231. The rear surface of the control module accommodating space S11 may be opened, and the control module 280 may be arranged in the control module accommodating space S11 from the rear side of the frame body 231.

The control module accommodating space S11 may face the cover through-hole 264 formed in the first rear cover 260.

The PCB case 281 of the control module 280 may be fastened to the frame body 231. The PCB case 281 may protect the main PCB therein.

A partition plate 243 may be provided in the frame body 231. The partition plate 243 may protrude rearward from an inside of the frame body 231. The partition plate 243 may be arranged transversely. The partition plate 243 may partition an interior of the frame body 231 into an upper space and a lower space located below the upper space. At this time, the upper space may include the control module accommodating space S11 in which the control module 280 is accommodated. The lower space may include a condenser accommodating space S12 and a gas discharging space S13, which will be described below.

At least one valve mounted portion 240, 241, and 242 may be formed in the frame body 231. The valve mounted portions 240, 241, and 242 may be formed on the front surface 237 or an upper surface 238 of the frame body 231.

At least a part of the material supplier inlet channel module 3A may be mounted on the main frame 230. In more detail, the opening/closing valves 313, 323, and 333 may be mounted on the main frame 230. In more detail, at least one opening/closing valve mounted portion 240 may be formed on the flat surface 237A of the front surface 237 of the frame body 231, and the opening/closing valves 313, 323, and 333 may be mounted on the opening/closing valve mounted portions 240.

The number of the opening/closing valve mounted portions 240 may be the same as the number of the opening/closing valves 313, 323, and 333. The first opening/closing valve 313 may be mounted on a first opening/closing valve mounted portion 240A, the second opening/closing valve 323 may be mounted on a second opening/closing valve mounted portion 240B, and the third opening/closing valve 333 may be mounted on a third opening/closing valve mounted portion 240C.

The opening/closing valve mounted portions 240 may be transversely located between a fermentation module contact body 232 and the water tank supporter 233. Also, the opening/closing valve mounted portions 240 may be located above the blower fan mounted portion 236.

Also, at least a part of the air controlling channel module 15 may be mounted on the main frame 230. In more detail, at least one of the air supplying opening/closing valve 159 and the air discharging valve 156 may be mounted on the main frame 230. In more detail, at least one air controlling valve mounted portion 241 and 242 may be formed on the upper surface 238 of the frame body 231, and the air supplying opening/closing valve 159 and/or the air discharging valve 156 may be mounted on the air controlling valve mounted portions 241 and 242. The air supplying opening/closing valve 159 may be mounted on the first air controlling valve mounted portion 241, and the air discharging valve 156 may be mounted on the second air controlling valve mounted portion 242.

The first air controlling valve mounted portion 241 may be arranged to be closer to the water tank supporter 233 among the fermentation module contact body 232 and the water tank supporter 233, and the second air controlling valve mounted portion 242 may be arranged to be closer to the fermentation module contact body 232 among the fermentation module contact body 232 and the water tank supporter 233. That is, the air supplying opening/closing valve 159 and the first air controlling valve mounted portion 241 may be arranged to be closer to the water tank 51 among the fermentation module 1 and the water tank 51, and the air discharging valve 156 and the second air controlling valve mounted portion 242 may be arranged to be closer to the fermentation module 1 among the fermentation module 1 and the water tank 51. Accordingly, when the air discharging valve 156 is switched on and opened, the air may be promptly discharged from the fermentation tank module 111 of the fermentation module 1.

Meanwhile, the main frame 230 may further include the fermentation module contact body 232 in contact with the fermentation module 1.

The fermentation module contact body 232 may be provided on the front surface of the frame body 231. In more detail, the fermentation module contact body 232 may be provided between the flat surface 237A and the first curved surface 237B of the front surface 237 of the frame body 231.

The fermentation module contact body 232 may extend vertically. A part of an upper portion of the fermentation module contact body 232 may protrude above the upper surface 238 of the frame body 231.

The fermentation module contact body 232 may be located between the inner end of the lower front fermentation module cover 216 (see FIG. 3) and the inner end 267B of the lower rear fermentation module cover 267 (see FIG. 3) along an outer circumferential direction of the fermentation module 1.

The fermentation module contact body 232 may include a contact portion 232A. The contact portion 232A may be in contact with the outer circumference of the fermentation module 1. The contact portion 232A may be rounded in a transverse direction, and the curvature of the contact portion 232A may be the same as the curvature of the outer circumference of the fermentation module 1. Also, the curvature of the contact portion 232A may be the same as the curvature of the first curved surface 237B. When the fermentation module 1 is mounted, a mounting position for the fermentation module 1 may be determined based on the fermentation module case 201 (see FIG. 2), the first curved surface 237A of the frame body 231, and the contact portion 232A of the fermentation module contact body 232.

The main frame 230 may further include the water tank supporter 233 supporting the water tank 51.

The water tank supporter 233 may be provided on the front surface 237 of the frame body 231. In more detail, the water tank supporter 233 may be provided on the second curved surface 237C of the front surface 237 of the frame body 231.

The water tank supporter 233 may not overlap with the flat surface 237A of the front surface 237 of the frame body 231 in a front-rear direction.

The water tank supporter 233 may be transversely spaced apart from the fermentation module contact body 232. The fermentation module contact body 232 may be arranged to be closer to one surface among opposite surfaces 239 of the frame body 231, and the water tank supporter 233 may be arranged to be closer to the other surface among the opposite surfaces 239 of the frame body 231.

The water tank supporter 233 may include a support plate 234 and a reinforcement wall 235.

The support plate 234 may be upwardly spaced apart from the base 100. The water tank 51 may be seated on the support plate 234, and the support plate 234 may support the water tank 51 on the lower side thereof.

A water supplying hole 234A may be formed in the support plate 234. The water supplying hole 234A may be penetrated vertically, and a water tank outlet channel 54 (see FIG. 1) connected to the water tank 51 may pass through the water supplying hole 234.

At least a part of the circumferential surface of the support plate 234 may be rounded. The circumferential surface of the support plate 234 may include a rounded outer surface 234B, a flat inner surface 234C, and a flat front surface 234D.

The outer surface 234B of the support plate 234 may be rounded, and may have the same curvature as the second curved surface 237C of the frame body 231.

As the inner surface 234C of the support plate 234 is formed in a flat surface, a space between the water tank supporter 233 and the fermentation module 1 may be widened.

An air injection pump mounted portion 234B on which the air injection pump 82 is mounted may be formed in the main frame 230. In more detail, the air injection pump mounted portion 234B may be provided on the front surface 234C of the support plate 234. The air injection pump 82 may be directly mounted on the air injection pump mounted portion 234E, or a bracket 82A to which the air injection pump 82 is coupled may be mounted on the air injection pump mounted portion 234E.

The compressor 131 may be arranged between the base 100 and the water tank 51. The compressor 131 may be vertically arranged between the support plate 234 and the base 100. That is, the support plate 234 may be upwardly spaced apart from the base 100, so that a separation space in which the compressor 131 is arranged may be formed. Accordingly, as compared to a case where the support plate 234 is not spaced apart from the base 100, the beverage maker may become compact.

The reinforcement wall 235 may extend downward from the support plate 234. In more detail, the reinforcement wall 235 may be formed as a part of the circumferential surface of the support plate 234 protrudes downward. In more detail, the reinforcement wall 235 may be formed as a part of the outer surface 234B of the circumferential surface of the support plate 234 protrudes downward.

The compressor 131 may be transversely arranged between the reinforcement wall 235 and the fermentation module 1.

The reinforcement wall 235 may be in contact with the support plate 234 and the base 100. A lower end of the reinforcement wall 235 may be supported while being in contact with the base 100. The reinforcement wall 235 may prevent the support plate 234 from being damaged or from being separated from the frame body 231 due to a load of the water tank 51. Also, the reinforcement wall 235 may surround the separation space between the base 100 and the support plate 234 to protect the compressor 131, and the like arranged in the separation space.

The reinforcement wall 235 may not overlap with the frame body 231 in a front-rear direction. The reinforcement wall 235 may not cover the opened portion 244 of the frame body 231. The outer surface of the reinforcement wall 235 may be surrounded by the water tank cover 202.

The main frame 230 may further include the blower fan mounted portion 236 on which the blower fan 135 is mounted.

The blower fan mounted portion 236 may be provided in the frame body 231. The blower fan mounted portion 236 may be arranged beside the opened portion 244 formed in the frame body 231. The blower fan mounted portion 236 may be transversely located between the opened portion 244 and the fermentation module contact body 232.

The blower fan mounted portion 236 may protrude forward of the frame body 231.

The blower fan mounted portion 236 may be transversely located between the water tank supporter 233 and the fermentation module contact body 232. The blower fan mounted portion 236 may be arranged to be closer to the fermentation module contact body 232 than the water tank supporter 233. One side of the blower fan mounted portion 236 may be in contact with the fermentation module contact body 232.

A mounting hole 236A opened in a front-rear direction may be formed in the blower fan mounted portion 236. The blower fan 135 may be fastened to the front surface of the blower fan mounted portion 236, and may be mounted on the mounting hole 236A.

The blower fan 135 may be arranged to face the condenser 132 from the front side of the condenser 132. The blower fan 135 and the blower fan mounted portion 236 may be transversely located between the fermentation module 1 and the compressor 131. Also, the blower fan 135 and the blower fan mounted portion 236 may be transversely located between the fermentation module 1 and the water tank supporter 233.

The blower fan mounted portion 236 may be located in front of the condenser accommodating space S12 in which the condenser 132 is accommodated.

The condenser accommodating space S12 in which at least a part of the condenser 132 is arranged may be formed in the main frame 230. The condenser accommodating space S12 may be located behind the blower fan mounted portion 236.

The condenser accommodating space S12 may be located below the control module accommodating space S11. The partition plate 243 may be arranged between the condenser accommodating space S12 and the control module accommodating space S11. The partition plate 243 and a barrier 245 which will be described below may prevent the temperature of the control module 280 from increasing due to heat of the condenser 132.

The rear surface of the condenser accommodating space S12 may be opened. Accordingly, the air heat-exchanged by the condenser 132 may pass through the cover through-hole 264 of the first rear cover 260 to be discharged to the through-hole 271 of the second rear cover 270.

The barrier 245 may be provided in the main frame 230.

In more detail, the barrier 245 may be provided in the blower fan mounted portion 236, and the barrier 245 may surround at least a part of the condenser accommodating space S12. The barrier 245 may be an insulation barrier configured to prevent the heat emitted by the condenser 132 from being diffused to the surroundings.

The barrier 245 may protrude rearward from the blower fan mounted portion 236. The barrier 245 may be located below the partition plate 243.

The barrier 245 may be an air guide configured to guide the air blown by the blower fan 135 such that the air may pass through the condenser 132 without spreading to the surroundings.

An auxiliary contact portion 236C in contact with the fermentation module 1 may be formed in the blower fan mounted portion 236. The auxiliary contact portion 236C may protrude forward of the blower fan mounted portion 236. The auxiliary contact portion 236C may be in contact with the fermentation module contact body 232.

The auxiliary contact portion 236C may be transversely rounded, and may have the same curvature as the contact portion 232A of the fermentation module contact body 232.

Meanwhile, the gas discharging space S13 in which at least a part of the gas discharging channel module 7 is accommodated may be formed in the main frame 230. The gas discharging space S13 may be formed in the frame body 231. The gas discharging space S13 may be located below the partition wall 243, and may be partitioned from the condenser accommodating space S12 by the barrier 245.

At least a part of the gas discharging channel module 7 may be arranged in the gas discharging space S13. For example, the pressure sensor 72 and the gas discharging valve 73 may be arranged in the space discharging space S13.

The rear surface of the gas discharging space S13 may be opened. Accordingly, the gas discharged from the gas discharging channel module 7 may pass through the cover through-hole 264 of the first rear cover 260 to be discharged to the through-hole 271 of the second rear cover 270.

Meanwhile, at least one valve installed in the main channel 4 may be fixed to the main frame 230. In more detail, at least one of the main valve 9, the bypass valve 35, and the channel switching valve 20 may be fixed to the main frame 230.

In more detail, a main channel valve mounted portion 249 on which at least one of the main valve 9, the bypass valve 35, and the channel switching valve 20 is mounted may be provided in the main frame 230.

The main channel valve mounted portion 249 may include a valve bracket 249A. In the main frame 230, at least one of the main valve 9, the bypass valve 35, and the channel switching valve 20 may be fastened to the valve bracket 249A.

The valve bracket 249A may be mounted on a bracket mounted groove 236B formed in the blower fan mounted portion 236. The bracket mounted groove 236B may be formed as a part of an upper portion of the front surface of the blower fan mounted portion 236 is recessed rearward.

FIG. 11 is a sectional view illustrating a dispenser for the beverage maker according to the embodiment of the present disclosure.

The dispenser 62 may include the valve body 600, an elevation valve body 610, the rotation lever 620, and the limit switch 630.

A valve channel 611 connected to the beverage discharging channel 61 (see FIG. 1) may be formed in the valve body 600.

The elevation valve body 610 may be elevatably discharged from the valve body 600, and may open/close the valve channel 611.

The rotation lever 620 may be rotatably connected to an upper portion of the elevation valve body 610, and may elevate the elevation valve body 610 when being rotated.

The limit switch 630 may be switched by the elevation valve body 610.

The dispenser 62 may further include a valve spring 640 embedded in the valve body 600 and configured to elastically press the elevation valve body 610 downward.

The valve body 600 may be mounted on the discharge valve mounted portion 214 formed in the center cover 213.

The valve channel 611 may include a transverse channel 612 extending along the valve body 600 in a front-rear direction, and a vertical channel 613 formed to be bent downward from a tip end of the transverse channel 612. When the transverse channel 612 is opened, the beverage guided to the beverage discharging channel 61 may be dropped to the lower side of the vertical channel 613 after sequentially passing through the transverse channel 612 and the vertical channel 613. The valve body 600 may include a transverse portion in which the transverse channel 612 is formed and a vertical portion which is formed to be perpendicular to the transverse portion and in which the vertical channel 613 is formed.

The elevation valve body 610 may be elevatably arranged in the valve channel 611, particularly, the vertical channel 613. The elevation valve body 610 may be lowered to a height at which the elevation valve body 610 blocks the transverse channel 612, and may be lifted up to a height at which the elevation valve body 610 opens the transverse channel 612. An upper portion of the elevation valve body 610 may protrude upward of the valve body 600. When the elevation valve body 610 is lifted up, a manipulation protrusion 614 contacting the limit switch 630 may protrude from the elevation valve body 610.

The rotation lever 620 may be hinge-connected to an upper portion of the elevation valve body 610, and may stand in a vertical direction or be laid in a transverse direction while being connected to the elevation valve body 610.

When the rotation lever 620 is laid in a transverse direction, the elevation valve body 610 is lifted up to open the transverse channel 612, and when the rotation lever 620 stands in a vertical direction, the elevation valve body 610 is lowered to close the transverse channel 612.

The limit switch 630 may be electrically connected to the control module 280, and the control module 280 may control the beverage maker according to an ON/OFF state of the limit switch 630.

The valve spring 640 may be arranged at an upper portion of the vertical portion of the valve body 600 to elastically press the elevation valve body 610 downward.

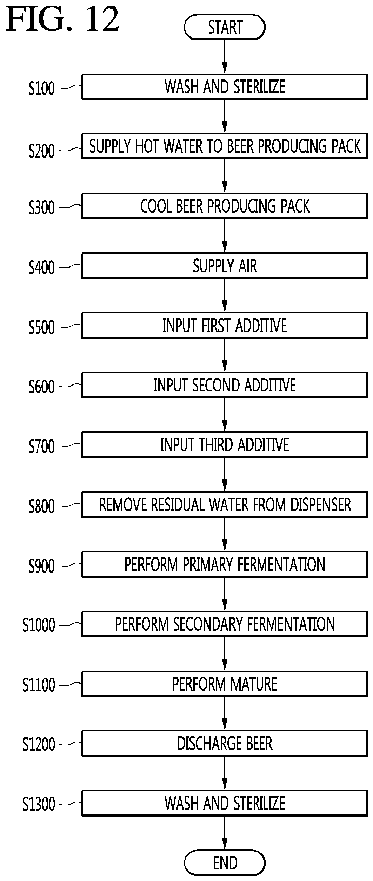

FIG. 12 is a flowchart illustrating a control sequence for the beverage maker according to the present disclosure.

Hereinafter, an operation of the beverage maker according to the present embodiment will be described with reference to FIG. 12 together with FIG. 1.

A method of producing a beverage by the beverage maker according to the present embodiment may include washing and sterilizing steps S100 and S1300 of washing and sterilizing the channels in the beverage maker. The washing and sterilizing steps S100 and S1300 may be progressed separately from a beverage producing course.

It is preferable that the washing and sterilizing steps S100 and S1300 are performed before the beverage producing course is performed and after the beverage producing course is performed.

Also, the washing and sterilizing steps S100 and S1300 may be performed by user's input during the beverage producing course. In this case, like a primary fermenting step or a secondary fermenting step, the washing and sterilizing steps S100 and S1300 may be performed while the main valve 9 is closed and additives are not contained in the material supplier 3.

The washing and sterilizing steps S100 and S1300 may be performed in a state in which the capsules C1, C2, and C3 are not accommodated in the material supplier 3.

On the other hand, the beverage producing course may be performed in a state in which the capsules C1, C2, and C3 are accommodated in the material supplier 3 and the fermentation container 12 is accommodated in the fermentation tank 112.

The user may input a washing and sterilizing command through the input unit provided in the control module 280, the remote controller, the portable terminal, or the like. The control module 280 may control the beverage maker to perform the washing and sterilizing steps S100 and S 1300 according to input of the washing and sterilizing command.

Also, the user may input a beverage producing command through the input unit provided in the control module 280, the remote controller, the portable terminal, or the like. Before and after the beverage producing course is performed according to the input of the beverage producing command, the control module 280 may automatically control the beverage maker to perform the washing and sterilizing steps S100 and S 1300.

Hereinafter, the washing and sterilizing step S100 performed before the beverage producing course will be described.

When the dispenser 62 is closed, the control module 280 may display a message to open the dispenser 62 on the display 282, and the user may open the dispenser 62 to switch on the limit switch 630.

When the limit switch 630 of the dispenser 62 is switched on and the washing and sterilizing command is input through the input unit, the remote controller, the portable terminal, or the like, the control module 280 may switch on the water supplying pump 52 and the water supplying heater 53. Also, the control module 280 may maintain the main valve 9 closed.

The control module 280 may control the channel switching valve 20 to separately or simultaneously wash and sterilize the material supplier 3 and the bypass channel 4C.

For example, the control module 280 may wash and sterilize the bypass channel 4C after washing and sterilizing the material suppler 3.

When the material supplier 3 is washed and sterilized, the control module 280 may control the channel switching valve 20 such that the first main channel 4A and the common material supplier inlet channel 301 communicate with each other, and may switch on the opening/closing valves 313, 323, and 333. When the opening/closing valves 313, 323, and 333 are switched on, the opening/closing valves 313, 323, and 333 may be opened.

When the bypass channel 4C is washed and sterilized, the control module 280 may control the channel switching valve 20 such that the first main channel 4A and the bypass channel 4C communicate with each other, and may switch on the bypass valve 35. When the bypass valve 35 is switched on, the bypass valve 35 may be opened.

When the water supplying pump 52 is switched on, water in the water tank 51 may flow to the water supplying heater 52 and may be heated by the water supplying heater 52.

When the control module 280 controls the channel switching valve 20 such that the first main channel 4A and the common material supplier inlet channel 301 communicate with each other, the water (that is, hot water) heated by the water supplying heater 53 may flow to the first capsule accommodating portion 31, the second capsule accommodating portion 32, and the third capsule accommodating portion 33 through the material supplier inlet channels 311, 321, and 331. The water heated by the water supplying heater 53 may flow to the second main channel 4B after passing through the first capsule accommodating portion 31, the second capsule accommodating portion 32, and the third capsule accommodating portion 33, and may be discharged to the dispenser 62 through the beverage discharging channel 61.

When the control module 280 controls the channel switching valve 20 such that the first main channel 4A and the bypass channel 4C communicate with each other, the water (that is, the hot water) heated by the water supplying heater 53 may flow to the bypass valve 35 through the bypass channel 4C. The water heated by the water supplying heater 53 may flow to the second main channel 4B after passing through the bypass valve 35, and may be discharged to the dispenser 62 through the beverage discharging channel 61.

When the control is performed as described above, in the beverage maker, the first main channel 4A, the bypass channel 4C, the bypass valve 35, the capsule accommodating portions 31, 32, and 33, the beverage discharging channel 61, and the dispenser 62 may be washed and sterilized by the water heated by the water supplying heater 53.

The beverage maker may perform the above-described washing and sterilizing during a washing set time, and may complete the washing and sterilizing process after the washing set time.

After the washing set time elapses, the control module 280 may switch off the water supplying pump 52 and the water supplying heater 53, and may switch off all the bypass valve 35 and the opening/closing valve 313, 323, and 333. When the bypass valve 35 and the opening/closing valves 313, 323, and 333 are switched off, all the bypass valve 35 and the opening/closing valve 313, 323, and 333 may be closed.

Further, the method of producing a beverage by the beverage maker according to the present embodiment may include the beverage producing course of producing a beverage.

Hereinafter, the beverage producing course will be described.

For the beverage producing course, the user may open the fermentation lid 107, insert the fermentation container 12 into the opening 170, and seat the fermentation container 12 on the fermentation tank module 111. Thereafter, the user may close the fermentation lid 107, and the fermentation container 12 may be accommodated and stored in the fermentation tank module 111 and the fermentation lid 107. At this time, an inside of the fermentation tank 112 may be closed by the fermentation lid 107.

Further, before and after the fermentation container 12 is seated, the user may cover the plurality of capsule accommodating portions 31, 32, and 33 using the lid module 37 after inserting the plurality of capsules C1, C2, and C3 into the material supplier 3.

The user may input the beverage producing command through the input unit connected to the control module 280, the remote controller, the portable terminal, or the like. The control module 280 may control the beverage maker to perform the beverage producing course according to the input of the beverage producing command.

In the beverage producing course, the control module 280 may initiate a water supplying step S200 of supplying water to the fermentation container 12. The water supplying step S200 may be a liquid malt forming step of forming liquid malt by evenly mixing malt in the fermentation container 12 with the hot water.

In the water supplying step S200, the control module 280 may switch on the water supplying pump 52 and the water supplying heater 53, and may control the channel switching valve 20 such that the first main channel 4A and the bypass channel 4C communicate with each other. In the water supplying step S200, the control module 280 may switch on the bypass valve 35, and may switch on the main valve 9. The control module 280 may switch on the main valve 9, which is switched off, to open the main valve 9. In the water supplying step S200, the control module 280 may maintain the first opening/closing valve 313, the second opening/closing valve 323, and the third opening/closing valve 333 in an OFF state.

Meanwhile, the control module 280 may switch on the gas discharging valve 73 when the water is supplied to the fermentation container 12. Further, the control module 280 may switch on the air discharging valve 156 to open the air discharging valve 156.

The water in the water tank 51 may be discharged from the water tank 51 to pass through the water supplying pump 52, may flow to the water supplying heater 53, and may be heated by the water supplying heater 53. The water heated by the water supplying heater 53 may sequentially pass through the first main channel 4A, the channel switching valve 20, and the bypass valve 35, and may pass through the main valve 9 to be introduced into the fermentation container 12. The hot water introduced into the fermentation container 12 through the main channel 4 may be mixed with the malt accommodated in the fermentation container 12, and the malt in the fermentation container 12 may be mixed with the water, and thus may be gradually diluted. Meanwhile, since the hot water is supplied to the fermentation container 12, the malt accommodated in the fermentation container 12 may be quickly and evenly mixed with the hot water.

The fermentation container 12 may be gradually expanded when the water is introduced as described above, a part of air between the fermentation container 12 and the fermentation tank 112 may flow to the air supplying channel 154 as the fermentation container 12 is expanded, and the air flowing to the air supplying channel 154 may be discharged to the air discharging valve 156.

While the water is introduced into the fermentation container 12, the part of the air filled between the fermentation container 12 and the fermentation tank 112 may be discharged through the air discharging valve 156, and the fermentation container 12 may receive the water without being broken or torn inside the fermentation tank 112.

Meanwhile, in the water supplying step S200, it is preferable that the water supplying heater 53 heats the water to 50°C to 70°C, and the control module 280 may control the water supplying heater 53 depending on the temperature detected by the thermistor 57.

The beverage maker may perform the water supplying step S200 until an amount of the water detected by the flow meter 56 arrives at a predetermined amount, and may complete the water supplying step S200 when the amount of the water detected by the flow meter 56 arrives at the predetermined amount.

When the water supplying step S200 is completed, the control module 280 may switch off the water supplying pump 52 and the water supplying heater 53, and may switch off the bypass valve 35. When the water supplying step S200 is completed, the control module 280 may switch off the gas discharging valve 73. When the water supplying step S200 is completed, the control module 280 may perform a control to close the air discharging valve 156.

Meanwhile, the beverage maker may perform a control such that the air is introduced into the fermentation container 12 during the water supplying step S200.

The control module 280 may primarily introduce the water into the fermentation container 12, and then terminate the introduction. Thereafter, the control module 280 may inject the air into the fermentation container 12, and then terminate the injection. Finally, the control module 280 may secondarily introduce the hot water into the fermentation container 12, and then terminate the introduction. Further, after all the primary water introduction, the air injection, and the secondary water introduction are completed, the water supplying step S200 may be completed.

As a first example of the water supplying step S200, only a hot water supplying process of supplying the hot water may be performed.

As a second example of the water supplying step S200, a primary hot water supplying process of primarily supplying the hot water, an air injecting process of injecting the air, and a secondary hot water supplying process of secondarily supplying the hot water may be sequentially performed.

First, as the first example of the water supplying step S200, a case where in the water supplying step S200, only the hot water supplying process is performed will be described below.

When the hot water supplying process is initiated, the control module 280 may switch on the water supplying pump 52 and the water supplying heater 53, and may control the channel switching valve 20 such that the first main channel 4A and the bypass channel 4C communicate with each other. Also, when the hot water supplying process is initiated, the control module 280 may switch on the bypass valve 35, and may switch on the main valve 9. When the hot water supplying process is initiated, the control module 280 may switch on the gas discharging valve 73. When the hot water supplying process is initiated, the control module 280 may switch on the air discharging valve 156.

Further, when the hot water supplying process is completed, the control module 280 may switch off the water supplying pump 52 and the water supplying heater 53, and may switch off the bypass valve 35. When the hot water supplying process is completed, the control module 280 may switch off the gas discharging valve 73. When the hot water supplying process is completed, the control module 280 may switch off the air discharging valve 156.

Hereinafter, as the second example of the water supplying step S200, a case where in the water supplying step S200, the primary hot water supplying process, the air injecting process, and the secondary hot water supplying process are sequentially performed will be described.

When the primary hot water supplying process is initiated, the control module 280 may switch on the water supplying pump 52 and the water supplying heater 53, and may control the channel switching valve 20 such that the first main channel 4A and the bypass channel 4C communicate with each other. Also, when the primary hot water supplying process is initiated, the control module 280 may switch on the bypass valve 35, and may switch on the main valve 9. When the primary hot water supplying process is initiated, the control module 280 may switch on the gas discharging valve 73. When the primary hot water supplying process is initiated, the control module 280 may switch on the air discharging valve 156.

Further, when the primary hot water supplying process is completed, the control module 280 may switch off the water supplying pump 52 and the water supplying heater 53. When the primary hot water supplying process is completed, the control module 280 may maintain the bypass valve 35 and the main valve 9 in an ON state. When the primary hot water supplying process is completed, the control module 280 may maintain the gas discharging valve 73 in an ON state. When the primary hot water supplying process is completed, the control module 280 may maintain the air discharging valve 156 in an ON state. In the primary hot water supplying process, the water may be introduced into the fermentation container 12, the fermentation container 12 may be expanded by the introduced water, and the part of the air between the fermentation container 12 and the fermentation tank 112 may be pushed by the expanded fermentation container 12 to flow to the air supplying channel 154, and may be discharged to the outside through the air discharging valve 156.

When the air injecting process is initiated, the control module 280 may switch on the air injection pump 82. Also, when the air injection process is initiated, the control module 280 may control the channel switching valve 20 such that the air injection channel 81 and the bypass channel 4C communicate with each other, and may perform a control to close the air supplying opening/closing valve 159.

While the air injection pump 82 is switched on, the air pumped by the air injection pump 82 may be introduced into the bypass channel 4C through the air injection channel 81, and may be introduced into the fermentation container 12 through the main valve 9. In this way, the air introduced into the fermentation container 12 may collide with the liquid malt to help to more evenly mix the malt with the hot water.

As the air is introduced into the fermentation container 12, the fermentation container 12 may be expanded, and the part of the air between the fermentation container 12 and the fermentation tank 112 may be pushed by the expanded fermentation container 12 to flow to the air supplying channel 154, and may be discharged to the outside through the air discharging valve 156.

When a pressure detected by the pressure sensor 72 is not less than a predetermined pressure, the control module 280 may complete the air injection process, and may switch off the air injection pump 82 for the completion of the air injection process. When the air injection process is completed, the control module 280 may maintain the main valve 9, the bypass valve 35, the gas discharging valve 73, and the air discharging valve 156 in an ON state.
when the secondary hot water supplying process is initiated, the control module 280 may switch on the water supplying pump 52 and the water supplying heater 53. Also, when the secondary hot water supplying process is initiated, the control module 280 may control the channel switching valve 20 such that the first main channel 4A and the bypass channel 4C communicate with each other.

Similar to the primary hot water supplying process, the water in the water tank 51 may be supplied to the fermentation container 12, and new hot water may be additionally supplied to the fermentation container 12.

In the above-described secondary hot water supplying process, the fermentation container 12 may be further expanded by the additionally introduced water, and the part of the air remaining between the fermentation container 12 and the fermentation tank 112 may be pushed by the expanded fermentation container 12 to flow to the air supplying channel 154, and may be discharged to the outside through the air discharging valve 156.

The control module 280 may determine whether the secondary hot water supplying process is completed, depending on a flow rate detected by the flow meter 56 during the secondary hot water supplying process. When the flow rate detected by the flow meter 56 arrives at a predetermined flow rate during the secondary hot water supplying process, the control module 280 may determine that the secondary hot water supplying process is completed, may switch off the water supplying pump 52 and the water supplying heater 53, and may switch off the main valve 9, the bypass valve 35, and the gas discharging valve 73.

Further, the control module 280 may perform a control to switch off and close the air discharging valve 156 such that the air in the fermentation tank 112 is not discharged through the air discharging valve 156.

Meanwhile, when the water supplying step S200 is completed, the beverage maker may perform a fermentation tank cooling step S300 of cooling the fermentation tank 112.

The control module 280 may control the temperature controller 11 to cool the fermentation tank 112. In more detail, the control module 280 may control the compressor 131 and the expansion mechanism 133 of the refrigeration cycle device 13 to cool the fermentation tank 112. The refrigerant compressed by the compressor 131 may be condensed by the condenser 132 and then may be expanded by the expansion mechanism 133. The refrigerant expanded by the expansion mechanism 133 may steal heat of the fermentation tank 112 while passing through the evaporator 134, and may be evaporated. The refrigerant passing through the evaporator 134 may be suctioned into the compressor 131. When the compressor 131 is driven, the fermentation tank 112 may be gradually cooled, and the fermentation container 12 accommodated in the fermentation tank 112 and the liquid malt accommodated in the fermentation container 12 may be cooled.

When the fermentation tank 112 is cooled as described above, the beverage maker may cool the fermentation container 12 to a middle temperature, for example, 23°C to 27°C, and the control module 280 may control the compressor 131 depending on the temperature detected by the temperature sensor 16 installed in the fermentation tank 112. The control module 280 may switch on the compressor 131 when the temperature detected by the temperature sensor 16 exceeds a compressor-on temperature. The control module 280 may switch off the compressor 131 when the temperature detected by the temperature sensor 16 is not more than a compressor-off temperature.

During the fermentation tank cooling step S300, the control module 280 may maintain the air discharging valve 156 closed, the air between the fermentation container 12 and the fermentation tank 112 is not discharged to the outside through the air discharging valve 156, and the air in the fermentation tank 112 may be quickly cooled.

Exceptionally, when the temperature of the fermentation container 12 is lower than the middle temperature since the external temperature is very low, the control module 280 may switch on the heater 14 wound on the fermentation tank 112. The control module 280 may switch on the heater 14 when the temperature detected by the temperature sensor 16 is smaller than a heater-on temperature. The control module 280 may switch off the heater 14 when the temperature detected by the temperature sensor 16 is not less than a heater-off temperature.

After the fermentation tank cooling step S300 is initiated and the compressor 131 is switched on as described above, when the temperature detected by the temperature sensor 16 is not more than the compressor-off temperature at least one time, the beverage maker may perform a mixing step S400 of mixing the liquid malt by supplying the air into the fermentation container 12. Alternatively, after the fermentation tank cooling step S300 is initiated and the heater 14 is switched on as described above, when the temperature detected by the temperature sensor 16 is not less than the heater-off temperature at least one time, the beverage maker may perform the mixing step S400 of mixing the liquid malt by supplying the air into the fermentation container 12.

Even during the mixing step S400, the beverage maker may perform a control to switch on/off the compressor 131 and the heater 14 depending on the temperature detected by the temperature sensor 16, and the ON/OFF control of the compressor 131 and the heater 14 may continue until additive inputting steps S500, S600, and S700 are completed.

In the mixing step S400, the control module 280 may switch on the air injection pump 82 and switch off the air supplying opening/closing valve 159, and may control the channel switching valve 20 such that the air injection channel 81 and the bypass channel 4C communicate with each other. Also, the control module 280 may switch on the bypass valve 35, the main valve 9, and the gas discharging valve 73. The control module 280 may perform a control to open the air discharging valve 156.

While the air injection pump 82 is switched on, the air pumped by the air injection pump 82 may be introduced into the bypass channel 4C through the air injection channel 81, and then may be introduced into the fermentation container 12 through the second main channel 4B and the main valve 9. In this way, the air introduced into the fermentation container 12 may collide with the liquid malt to help to evenly mix the malt and the water with each other, and the air colliding with the liquid malt may supply oxygen to the liquid malt.

While the air is injected into the fermentation container 12, the fermentation container 12 may be expanded by the air injected into the fermentation container 12. The part of the air between the fermentation container 12 and the fermentation tank 112 may be pushed by the expanded fermentation container 12 to flow to the air supplying channel 154, and may be discharged to the outside through the air discharging valve 156.

As the part of the air between the fermentation container 12 and the fermentation tank 112 is discharged through the air supplying channel 154 and the air discharging valve 156, the fermentation container 12 may be easily expanded, and the air of the main channel 4 may be promptly introduced into the fermentation container 12 and may be mixed with the liquid malt.

The control module 280 may mix the air with the liquid malt during a predetermined mixing time (for example, one hour) after the air injection pump 82 is switched on, may switch off the air injection pump 82 when the air injection pump 82 is switched on and the predetermined mixing time elapses, and may switch off the bypass valve 35 and the gas discharging valve 73. When the air injection pump 82 is switched off, the control module 280 may perform a control to close the air discharging valve 156. That is, when the predetermined mixing time elapses, the beverage maker may complete the mixing step S400.

The beverage maker may perform the additive inputting steps S500, S600, and S700 after the mixing step S400.

In the additive inputting steps S500, S600, and S700, the beverage maker may simultaneously or sequentially input the additive of the first capsule C1, the additive of the second capsule C2, and the additive of the third capsule C3.

The control module 280 may sequentially perform an additive inputting process S500 for the first capsule C1, an additive inputting process S600 for a second capsule C2, and an additive inputting process S700 for the third capsule C3.

The additive inputting steps S500, S600, and S700 may be performed by a hydraulic pressure by the water supplying pump 52 or may be performed by a pneumatic pressure by the air injection pump 82.

First, a case where the additive inputting steps S500, S600, and S700 are performed by the hydraulic pressure will be described.

In the additive inputting steps S500, S600, and S700, the control module 280 may control the channel switching valve 20 such that the first main channel 4A and the common material supplier inlet channel 301 communicate with each other.

In the additive inputting process S500 for the first capsule C1, the control module 280 may switch on the water supplying pump 52, the main valve 9, the first opening/closing valve 313, and the gas discharging valve 73 during a first additive setting time. When the water supplying pump 52 is switched on, the water in the water tank 51 may pass through the water supplying pump 52, may pass through the water supplying heater 53, and then may be introduced into the first capsule C1. The water introduced into the first capsule C1 may be mixed with the additive accommodated in the first capsule C1, may flow to the second main channel 4B together with the additive accommodated in the first capsule C1, and may be introduced into the fermentation container 12 through the second main channel 4B. When the first additive setting time elapses, the control module 280 may switch off the water supplying pump 52 and the first opening/closing valve 313, and may complete the additive inputting process S500 for the first capsule C1.

In the additive inputting process S600 for the second capsule C2, the control module 280 may switch on the water supplying pump 52 and the second opening/closing valve 323 during a second additive setting time. When the water supplying pump 52 is switched on, the water in the water tank 51 may pass through the water supplying pump 52, may pass through the water supplying heater 53, and then may be introduced into the second capsule C2. The water introduced into the second capsule C2 may be mixed with the additive accommodated in the second capsule C2, may flow to the second main channel 4B together with the additive accommodated in the second capsule C2, and may be introduced into the fermentation container 12 through the second main channel 4B. When the second additive setting time elapses, the control module 280 may switch off the water supplying pump 52 and the second opening/closing valve 323, and may complete the additive inputting process S600 for the second capsule C2.

In the additive inputting process S700 for the third capsule C3, the control module 280 may switch on the water supplying pump 52 and the third opening/closing valve 333 during a third additive setting time. When the water supplying pump 52 is switched on, the water in the water tank 51 may pass through the water supplying pump 52, may pass through the water supplying heater 53, and then may be introduced into the third capsule C3. The water introduced into the third capsule C3 may be mixed with the additive accommodated in the third capsule C3, may flow to the second main channel 4B together with the additive accommodated in the third capsule C3, and may be introduced into the fermentation container 12 through the second main channel 4B. When the third additive setting time elapses, the control module 280 may switch off the water supplying pump 52 and the third opening/closing valve 333, and may complete the additive inputting process S700 for the third capsule C3.

Meanwhile, the additive inputting steps S500, S600, and S700 may be performed by the pneumatic pressure.

In the additive inputting steps S500, S600, and S700, the control module 280 may control the channel switching valve 20 such that the air injection channel 81 and the common material supplier inlet channel 301 communicate with each other. That is, in the additive inputting steps S500, S600, and S700, the control module 280 may control the channel switching valve 20 such that the air injection channel 81 and the material accommodating portions communicate with each other.

In the additive inputting steps S500, S600, and S700, the control module 280 may close the air supplying opening/closing valve 159, and may open the air discharging valve 156.

In the additive inputting process S500 for the first capsule C1, the control module 280 may switch on the air injection pump 82, the main valve 9, the first opening/closing valve 313, and the gas discharging valve 73 during the first additive setting time. When the air injection pup 82 is switched on, the pumped air may pass through the first opening/closing valve 313, and may be then introduced into the first capsule C1. The air introduced into the first capsule C1 may flow to the second main channel 4B together with the additive accommodated in the first capsule C1, and may be introduced into the fermentation container 12 through the second main channel 4B. When the first additive setting time elapses, the control module 280 may switch off the air injection pump 82 and the first opening/closing valve 313, and may complete the additive inputting process S500 for the first capsule C1.

In the additive inputting process S600 for the second capsule C2, the control module 280 may switch on the air injection pump 82 and the second opening/closing valve 323 during the second additive setting time. When the air injection pup 82 is switched on, the pumped air may pass through the second opening/closing valve 323, and may be then introduced into the second capsule C2. The air introduced into the second capsule C2 may flow to the second main channel 4B together with the additive accommodated in the second capsule C2, and may be introduced into the fermentation container 12 through the second main channel 4B. When the second additive setting time elapses, the control module 280 may switch off the air injection pump 82 and the second opening/closing valve 323, and may complete the additive inputting process S600 for the second capsule C2.

In the additive inputting process S700 for the third capsule C3, the control module 280 may switch on the air injection pump 82 and the third opening/closing valve 333 during the third additive setting time. When the air injection pup 82 is switched on, the pumped air may pass through the third opening/closing valve 333, and may be then introduced into the third capsule C3. The air introduced into the third capsule C3 may flow to the second main channel 4B together with the additive accommodated in the third capsule C3, and may be introduced into the fermentation container 12 through the second main channel 4B. When the third additive setting time elapses, the control module 280 may switch off the air injection pump 52 and the third opening/closing valve 333, and may complete the additive inputting process S700 for the third capsule C3.

As the additives and the air are injected from the main channel 4 into the fermentation container 12, the fermentation container 12 may be further expanded, and the part of the air between the fermentation container 12 and the fermentation tank 112 may be pushed by the expanded fermentation container 12 to flow to the air supplying channel 154, and may be discharged to the outside through the air discharging valve 156.

As the part of the air between the fermentation container 12 and the fermentation tank 112 is discharged through the air supplying channel 154 and the air discharging valve 156, the fermentation container 12 may be easily expanded, and the additives and the air of the main channel 4 may be promptly introduced into the fermentation container 12.

When all the additive inputting steps S500, S600, and S700 performed by the hydraulic pressure by the water supplying pump 52 are completed, a material supplier residual water removing step S800 of removing residual water in the material supplier 3 may be performed. However, when the additive inputting steps S500, S600, and S700 are performed by the hydraulic pressure by the air injection pump 52, the material supplier residual water removing step S800 may be omitted

In the material supplier residual water removing step S800, the control module S800 may switch on the air injection pump 82 and switch off the air supplying opening/closing valve 159, and may control the channel switching valve 20 such that the air injection channel 81 and the common material supplier inlet channel 301 communicate with each other. Also, in the material supplier residual water removing step S800, the control module 280 may switch on the first opening/closing valve 313, the second opening/closing valve 323, and the third opening/closing valve 333, and may switch on the main valve 9, and the gas discharging valve 73.

When the air injection pump 82 is switched on, the air may sequentially pass through the air injection channel 81 and the common material supplier inlet channel 301, may be supplied to the first capsule accommodating portion 31, the second capsule accommodating portion 32, and the third capsule accommodating portion 33, and then may blow residual water remaining in the first capsule accommodating portion 31, the second capsule accommodating portion 32, and the third capsule accommodating portion 33 to the second main channel 4B. The air may be moved to the fermentation container 12 together with the residual water moved to the first capsule accommodating portion 31, the second capsule accommodating portion 32, and the third capsule accommodating portion 33. In the material supplier residual water removing step S800, the control module 280 may open the discharge valve 156.

As the residual water and the air are injected from the main channel 4 into the fermentation container 12, the fermentation container 12 may be further expanded, and the part of the air between the fermentation container 12 and the fermentation tank 112 may be pushed by the expanded fermentation container 12 to flow to the air supplying channel 154, and may be discharged to the outside through the air discharging valve 156.

As the part of the air between the fermentation container 12 and the fermentation tank 112 is discharged through the air supplying channel 154 and the air discharging valve 156, the fermentation container 12 may be easily expanded, and the air and the residual water of the main channel 4 may be promptly introduced into the fermentation container 12.

The control module 280 may switch on the air injection pump 82 during a residual water removal setting time, and may switch off the air injection pump 82 and switch off the first opening/closing valve 313, the second opening/closing valve 323, the third opening/closing valve 333, the main valve 9, and the gas discharging valve 73 when the residual water removal setting time elapses. Also, the control module 280 may perform a control to close the air discharging valve 156.

The beverage maker may complete the material supplier residual water removing step S800 when the residual water removal setting time elapses.

When the material supplier residual water removing step S800 is completed, the control module 280 may display a capsule separating message indicating that the capsules C1, C2, and C3 may be removed from the display 282, and the user may remove empty capsules from the material supplier 3.

After the material supplier residual water removing step S800 is completed, the beverage maker may sequentially perform a primary fermenting step S900 and a secondary fermenting step S1000.

In the primary fermenting step S900, the control module 280 may control the compressor 131 and the heater 14 to a primary fermentation target temperature, and may control the compressor 131 and the heater 14 such that the temperature detected by the temperature sensor 16 is maintained in a primary fermentation setting temperature range. After the primary fermenting step S900 is initiated, the control module 280 may periodically switch on and then switch off the gas discharging valve 73, and may store the pressure detected by the pressure sensor 72 in a storage unit (not illustrated) while the gas discharging valve 73 is switched on. When a change in the pressure periodically detected by the pressure sensor 72 exceeds a first fermentation setting pressure, the control module 280 may determine that primary fermentation is completed, and may complete the primary fermenting step S900.

After the primary fermenting step S900 is completed, the control module 280 may initiate the secondary fermenting step S1000. In the secondary fermenting step S1000, the control module 280 may control the compressor 131 and the heater 14 to a secondary fermentation target temperature, and may control the compressor 131 and the heater 14 such that the temperature detected by the temperature sensor 16 is maintained in a secondary fermentation setting temperature range. After the secondary fermenting step S1000 is initiated, the control module 280 may periodically switch on and then switch off the gas discharging valve 73, and may store the pressure detected by the pressure sensor 72 in the storage unit (not illustrated) while the gas discharging valve 73 is switched on. When the change in the pressure periodically detected by the pressure sensor 72 exceeds a second fermentation setting pressure, the control module 280 may determine that secondary fermentation is completed, and may complete the secondary fermenting step S1000.

When both the primary fermenting step S900 and the secondary fermenting step S1000 are completed, the beverage maker may perform a maturing step S1100.

In the maturing step S 1100, the control module 280 may stand by during a mature time, and may control the compressor 131 and the heater 14 such that the temperature of the beverage is maintained between an upper limit of a setting mature temperature and a lower limit of the setting mature temperature during the mature time.

Since the beverage maker is generally used indoors, it is general that the temperature of the outside of the beverage maker is between the upper limit of the setting mature temperature and the lower limit of the setting mature temperature or is higher than the upper limit of the setting mature temperature. In this case, the control module 280 may switch off the compressor 131 when the temperature detected by the temperature sensor 16 is not more then the lower limit of the setting mature temperature, and may switch on the compressor 131 when the temperature detected by the temperature sensor 16 is not less than the upper limit of the setting mature temperature.

Exceptionally, when the temperature of the outside of the beverage maker is lower than the lower limit of the setting mature temperature, the control module 280 may switch on the heater 14 when the temperature detected by the temperature sensor 16 is lower than the lower limit of the setting mature temperature, and may switch off the heater 14 when the temperature detected by the temperature sensor 16 is not less than the upper limit of the setting mature temperature.

In the beverage maker, when the mature time elapses, the beverage may be completely produced.

The control module 280 may display completed production of the beverage through the display 282, and the like.

Also, the control module 280 may control the compressor 131 such that the temperature of the fermentation tank 112 is maintained between an upper limit and a lower limit of a predetermined beverage temperature. The control module 280 may switch on the compressor 131 when the temperature detected by the temperature sensor 16 is not less than the upper limit of the beverage temperature, and may switch off the compressor 131 when the temperature detected by the temperature sensor 16 is lower than the lower limit of the beverage temperature. Accordingly, the beverage maker may always provide a cool beverage to the user.

The control module 280 may maintain the temperature of the fermentation tank 112 between the upper limit and the lower limit of the predetermined beverage temperature until a beverage discharging step S1200 is completed.

In the beverage discharging step S1200, the user may manipulate the dispenser 62 to discharge the beverage.

When the user manipulates the dispenser 62 in an opened direction, the limit switch 630 may be contacted, and since the beverage is completely produced, the control module 280 may open the main valve 9.

When the main valve 9 is opened, the beverage in the fermentation container 12 may flow from the fermentation container 12 to the main channel 4 due to the pressure of the air between the fermentation container 12 and the fermentation tank 112, and may flow from the main channel 4 to the beverage discharging channel 61 to be discharged to the dispenser 62.

When the user manipulates the dispenser 62 in a closed direction after discharging a part of the beverage through the dispenser 62, the limit switch 630 may be uncontacted, and the control module 280 may close the main valve 9.

Thereafter, the control module 280 may perform a control to switch on the air injection pump 82, and to switch on and open the air supplying opening/closing valve 159. At this time, the air discharging valve 156 may be maintained closed.

When the air injection pump 82 is switched on, the air may sequentially pass through the air injection channel 81 and the air supplying channel 154 to be supplied to between the fermentation container 12 and the fermentation tank 112, and the air between the fermentation container 12 and the fermentation tank 112 may press the fermentation container 12 by the pressure by which the beverage in the fermentation container 12 may be raised to the second main channel 4B. This is for forming a sufficiently high pressure between the fermentation container 12 and the fermentation tank 112 such that the beverage in the fermentation container 12 is promptly discharged when the beverage is discharged at a next time.

The user may discharge the beverage through the dispenser 62 at least one time, and the control module 280 may determine whether the beverage is completely discharged using information on a time when the limit switch 630 is switched on, a time when an air pump 152 is driven, a time when the main valve 9 is switched on after the beverage is completely produced, and the like.

When the beverage is completely discharged, the control module 280 may perform a control to close the air supplying opening/closing valve 159, and to open the air discharging valve 156.

When the beverage is completely discharged, and the dispenser 62 is closed, the control module 280 switches on and opens the air discharging valve 156 during a completion setting time.

When the control is performed such that the air discharging valve 156 is opened, the air between the fermentation container 12 and the fermentation tank 112 may be discharged to the air discharging valve 156 through the air supplying channel 154, and a pressure between the fermentation container 12 and the fermentation tank 112 may be equal to the atmospheric pressure.

After the air discharging valve 156 is switched on, when the completion setting time elapses, the control module 280 switches off and closes the air discharging valve 156.

After the beverage is discharged, when the washing and sterilizing step S1300 is not performed or the washing and sterilizing step S1300 does not include a main channel washing process, the control module 280 may display, on the display 282, a pack removing message to remove the fermentation container 12. The user may open the fermentation lid 107 to remove the fermentation container 12 from the fermentation tank module 111.

When the fermentation lid 107 is opened, if the pressure inside the fermentation tank 112 is a high pressure that is larger than the atmospheric pressure by a predetermined pressure, the fermentation container 12 may bounce to the upper side of the fermentation tank 112 due to such a pressure difference.

On the other hand, when the part of the air between the fermentation container 12 and the fermentation tank 112 is discharged through the air discharging valve 156 before the user opens the fermentation lid 107, if the fermentation lid 107 is opened, the fermentation container 12 does not bounce to the upper side, and is maintained inside the fermentation tank 112.

That is, the user may withdraw the safely, cleanly, and previously used fermentation container 12 from the fermentation tank 112.

Meanwhile, when all the beverage in the fermentation container 12 is discharged, and the control module 280 determines that the beverage is completely discharged, the control module 280 may further perform the washing and sterilizing step S1300 after the beverage producing course and the discharge of the beverage.

The washing and sterilizing step S1300 after the beverage producing course and the discharge of the beverage may include at least one of a discharging valve washing process and the main channel washing process. When the washing and sterilizing step S1300 includes the discharging valve washing process and the main channel washing process, sequences of performing the washing processes may change as needed.

Since the discharging valve washing process is equal or similar to the above-described washing and the sterilizing step S100 before the beverage producing course, duplicate contents will be omitted. Hereinafter, the main valve washing process will be described.

When the limit switch 630 of the dispenser 62 is switched off, the control module 280 may switch on the water supplying pump 52 and the water supplying heater 53. Also, the control module 280 may open the main valve 9.

When the main channel washing process is initiated, the control module 280 may switch on the gas discharging valve 73. When the main channel washing process is initiated, the control module 280 may switch on the air discharging valve 156.

The control module 280 may control the channel switching valve 20 to separately or simultaneously wash and sterilize the material supplier 3 and the bypass channel 4C.

For example, the control module 280 may wash and sterilize the bypass channel 4C after wash and sterilize the material suppler 3.

When the material supplier 3 is washed and sterilized, the control module 280 may control the channel switching valve 20 such that the first main channel 4A and the common material supplier inlet channel 301 communicate with each other, and may switch on the opening/closing valves 313, 323, and 333. When the opening/closing valves 313, 323, and 333 are switched on, the opening/closing valves 313, 323, and 333 may be opened.

When the bypass channel 4C is washed and sterilized, the control module 280 may control the channel switching valve 20 such that the first main channel 4A and the bypass channel 4C communicate with each other, and may switch on the bypass valve 35. When the bypass valve is switched on, the bypass valve 35 may be opened.

When the water supplying pump 52 is switched on, water in the water tank 51 may flow to the water supplying heater 52 and may be heated by the water supplying heater 52.

When the control module 280 controls the channel switching valve 20 such that the first main channel 4A and the common material supplier inlet channel 301 communicate with each other, the water (that is, hot water) heated by the water supplying heater 53 may flow to the first capsule accommodating portion 31, the second capsule accommodating portion 32, and the third capsule accommodating portion 33 through the material supplier inlet channels 311, 321, and 331. The water heated by the water supplying heater 53 may flow to the second main channel 4B after passing through the first capsule accommodating portion 31, the second capsule accommodating portion 32, and the third capsule accommodating portion 33, and may be introduced into the empty fermentation container inside the fermentation tank 112 through the main channel connector 115.

When the control module 280 controls the channel switching valve 20 such that the first main channel 4A and the bypass channel 4C communicate with each other, the water (that is, the hot water) heated by the water supplying heater 53 may flow to the bypass valve 35 through the bypass channel 4C. The water heated by the water supplying heater 53 may flow to the second main channel 4B after passing through the bypass valve 35, and may be introduced into the empty fermentation container 12 inside the fermentation tank 112 through the main channel connector 115.

In the main channel washing process, the water performing the washing and sterilizing may be introduced into the fermentation container 12 emptied after the beverage is completely discharged, the fermentation container 12 may be expanded by the introduced water, and the part of the air between the fermentation container 12 and the fermentation tank 112 may be pushed by the expanded fermentation container 12 to flow to the air supplying channel 154, and may be discharged to the outside through the air discharging valve 156.

When the control is performed as described above, in the beverage maker, the first main channel 4A, the bypass channel 4C, the bypass valve 35, the capsule accommodating portions 31, 32, and 33, the second main channel 4B, and the main channel connector 115 may be washed and sterilized by the water heated by the water supplying heater 53.

The beverage maker may perform the above-described washing and sterilizing during a main channel washing set time, and may complete the main channel washing process after the main channel washing set time.

The control module 280 may switch off the water supplying pump 52 and the water supplying heater 53 after the main channel washing set time elapses, and may close all the main valve 9, the bypass valve 35, the opening/closing valve 313, 323, and 333, the gas discharging valve 73, and the air discharging valve 156.

After the washing and sterilizing step S1300 is completed, the user may open the fermentation lid 107, and may withdraw the fermentation container 12 containing the water performing the washing from the fermentation tank module 111.

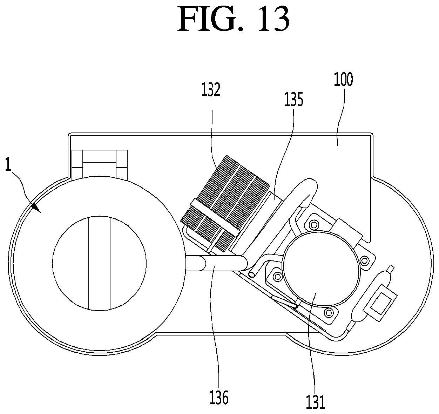

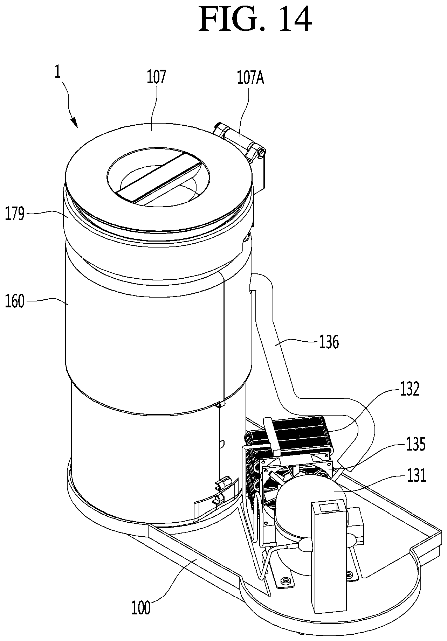

FIG. 13 is a plan view illustrating a state in which a refrigeration cycle device and a fermentation module are mounted on a base according to another embodiment of the present disclosure, and FIG. 14 is a perspective view illustrating a state in which the refrigeration cycle device and the fermentation module are mounted on the base according to another embodiment of the present disclosure.

Hereinafter, duplicate contents of the above description will be omitted, and a difference therebetween will be mainly described.

The blower fan 135 of the beverage maker according to the present embodiment may be arranged between the compressor 131 and the condenser 132. In more detail, the front surface of the blower fan 135 may be directed to the compressor 131, and the rear surface of the blower fan 135 may be directed to the condenser 132.

When the blower fan 135 is operated, air near the compressor 131 may be suctioned to the front surface of the blower fan 135, may be blown toward the condenser 132, and may pass through the condenser 132 to be discharged to the through-hole 271 of the rear cover 220. Accordingly, heat of the compressor 131 and the condenser 132 may be simultaneously dissipated by the blower fan 135.

The compressor 131, the blower fan 135, and the condenser 132 may be arranged in a row to be inclined in a front-rear direction.

A distance between the fermentation module 1 and the compressor 131 may be larger than a distance between the fermentation module 1 and the condenser 132.

At least one of the compressor 131, the blower fan 135, and the condenser 132 may overlap with the fermentation module 1 in a front-rear direction.

Also, the cooling pipe 136 may be connected to a side portion of the fermentation module 1.

Due to the above-described configurations, the beverage maker may become compact in a front-rear direction.

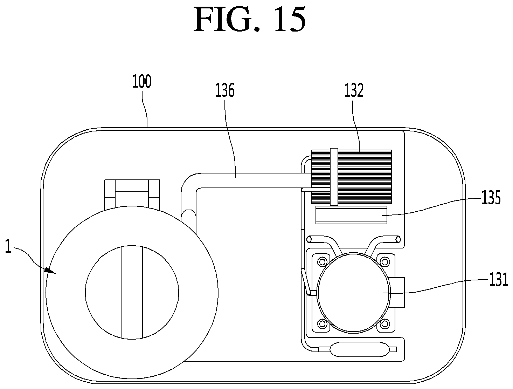

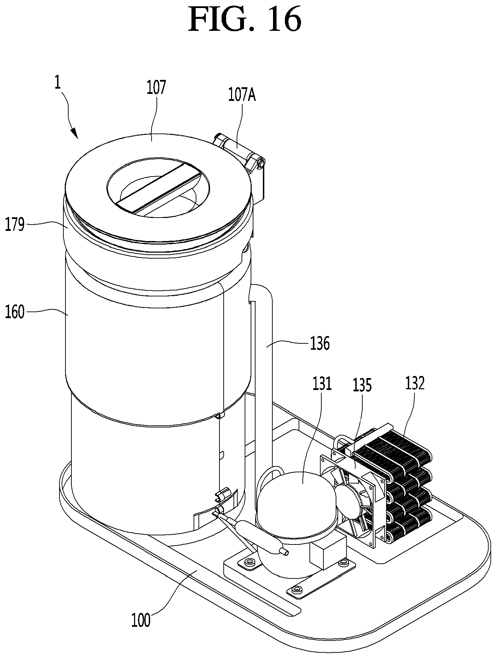

FIG. 15 is a plan view illustrating a state in which a refrigeration cycle device and a fermentation module are mounted on a base according to yet another embodiment of the present disclosure, and FIG. 16 is a perspective view illustrating a state in which the refrigeration cycle device and the fermentation module are mounted on the base according to the yet another embodiment of the present disclosure.

In the beverage maker according to the present embodiment, like the above-described embodiments, the blower fan 135 may be arranged between the compressor 131 and the condenser 132. The front surface of the blower fan 135 may be directed to the compressor 131, and the rear surface of the blower fan 135 may be directed to the condenser 132.

Accordingly, when the blower fan 135 is operated, air near the compressor 131 may be suctioned to the front surface of the blower fan 135, may be blown toward the condenser 132, and may pass through the condenser 132 to be discharged to the through-hole 271 of the rear cover 220. Accordingly, heat of the compressor 131 and the condenser 132 may be simultaneously dissipated by the blower fan 135.

However, unlike the above-described embodiments, in the beverage maker according to the present embodiment, the compressor 131, the blower fan 135, and the condenser 132 may be arranged in a row in a front-rear direction. That is, the condenser 132 may be arranged behind the compressor 131, and the blower fan 135 may be arranged between the compressor 131 and the condenser 132. Also, the cooling pipe 136 may be connected to a rear portion of the fermentation module 1.

Accordingly, as compared to a case where the compressor 131, the blower fan 135, and the condenser 132 are arranged in a row to be inclined in a front-rear direction, the size of the beverage maker may be slightly larger, but an inner space of the beverage maker may be enlarged. Accordingly, the beverage maker may be designed relatively easily. Also, since the distance between the condenser 132 and the fermentation module 1 becomes larger, the temperature of the fermentation module 1 may be prevented from increasing due to the heat generated by the condenser 132.

According to an exemplary embodiment of the present disclosure, the temperature of the fermentation tank is controlled by the refrigeration cycle, so that the beverage may be produced at a proper fermentation temperature.

Also, the air blown by the blower fan may pass through the condenser to be discharged to the through-hole formed in the rear cover. Accordingly, the condenser may be heat-discharged, and noise generated toward the front surface of the beverage maker may be reduced.

Also, the gas generated while the beverage is fermented may be guided to the gas discharging valve through the gas discharging channel, and may be discharged through the gas discharging valve to b discharged through the through-hole formed in the rear cover. Accordingly, the gas may be effectively discharged, and the noise generated toward the front surface of the beverage maker may be reduced. Also, since both the air performing the heat dissipation of dissipating the condenser and the air discharged through the gas discharging valve are discharged through the through-hole of the rear cover, the configuration of the beverage maker becomes simple, so that the design of the beverage maker becomes simple.

Also, the blower fan is arranged to be directed to a space between the compressor and the fermentation module, so that flow of the air suctioned into the blower fan becomes smooth, and the condenser is effectively heat-dissipated.

Also, at least a part of the blower fan is arranged between the fermentation module and the compressor in a front-rear direction, so that the beverage maker becomes compact in a front-rear direction.

Also, when the compressor, the blower fan, the condenser are arranged in a row to be inclined in a front-rear direction, the beverage maker may become compact in a front-rear direction.

The above description is merely illustrative description. Thus, the embodiments that are disclosed in the present disclosure are not for limiting but for describing the technical aspects.

## Claims

1. A beverage maker comprising:
a fermentation module (1) comprising a fermentation tank module (111) having an opening (170) formed in the fermentation tank module (111), and a fermentation lid (107) configured to open/close the opening (170);
a temperature controller configured to control a temperature inside the fermentation tank module (111);
a blower fan (135) configured to dissipate heat of the temperature controller;
a rear cover (220) arranged behind the fermentation module (1), and having a through-hole (271); and
a gas discharging channel module (7) connected to the fermentation module (1) to discharge gas inside the fermentation module (1);
wherein the through-hole (271) is formed in the rear cover (220) configured for discharging air blown by the blower fan (135) and the gas discharged from the gas discharging channel module (7) through the through-hole (271).

2. The beverage maker of claim 1, wherein the temperature controller is a refrigeration cycle device (13) having a compressor (131), a condenser (132), an expansion mechanism (133), and an evaporator (134) formed in the refrigeration cycle device (13) such that a refrigerant circulates in the compressor (131), the condenser (132), the expansion mechanism (133), and the evaporator (134), the evaporator (134) being configured to adjust a temperature inside the fermentation tank module (111),
wherein the blower fan (135) configure to dissipate heat of the condenser (132).

3. The beverage maker of claim 1 or 2, wherein the condenser (132) is arranged between the blower fan (135) and the through-hole (271).

4. The beverage maker of any one of claims 1 to 3, further comprising:
a main frame (230) having a condenser (132) accommodating space (S11) formed in the main frame (230) such that the condenser (132) is accommodated in the condenser (132) accommodating space (S11) and the condenser (132) accommodating space (S11) communicates with the through-hole (271).

5. The beverage maker of claim 4, wherein a blower fan mounted portion (236) on which the blower fan (135) is mounted is formed in the main frame (230), and
wherein the blower fan mounted portion (236) is located in front of the condenser (132) accommodating space (S11).

6. The beverage maker of any one of claims 4 or 5, wherein the gas discharging channel module (7) comprises:
a gas discharging channel (71) connected to the fermentation module (1); and
a gas discharging valve (73) connected to the gas discharging channel (71),
wherein a gas discharging space (S13) in which the gas discharging valve (73) is arranged and which communicates with the through-hole (271) is further formed in the main frame (230).

7. The beverage maker of claim 6, wherein a rear surface of the condenser accommodating space (S11) and/or the gas discharging space (S13) is open.

8. The beverage maker of any one of claims 6 or 7,
wherein a barrier is provided between the condenser (132) accommodating space (S11) and the gas discharging space (S13), and/or
wherein the gas discharging valve (73) is located behind the fermentation module (1).

9. The beverage maker of any one (131) of claims 2 to 8,
wherein the blower fan (135) has a front surface directed to a space between the compressor (131) and the fermentation module (1) and a rear surface directed to the condenser (132); and
wherein the through-hole (271) is located behind the condenser (132).

10. The beverage maker of any one of claims 2 to 9, wherein the compressor (131) is spaced apart from the fermentation module (1) in a left-right direction.

11. The beverage maker of any one of claims 2 to 10, wherein at least a part of the blower fan (135) is located between the compressor (131) and the fermentation module (1) in a left-right direction, and
wherein the condenser (132) is arranged behind the blower fan (135).

12. The beverage maker of any one of any one of claims 2 to 11,
wherein the blower fan (135) is arranged between the compressor (131) and the condenser (132); and
wherein the through-hole (271) is located behind the condenser (132).

13. The beverage maker of any one of claims 2 to 12, wherein the compressor (131), the blower fan (135), and the condenser (132) are arranged in a row in a front-rear direction, or
wherein the compressor (131), the blower fan (135), and the condenser (132) are arranged in a row to be inclined in a front-rear direction.

14. The beverage maker of claim 13, wherein a distance between the fermentation module (1) and the compressor (131) is larger than a distance between the fermentation module (1) and the condenser (132).

## Patentansprüche

1. Getränkeherstellungsvorrichtung, die Folgendes umfasst:
ein Fermentationsmodul (1), das ein Fermentationstankmodul (111), das eine im Fermentationstankmodul (111) ausgebildete Öffnung (170) aufweist, und einen Fermentationsdeckel (107), der konfiguriert ist, die Öffnung (170) zu öffnen bzw. zu schließen, umfasst;
eine Temperatursteuereinheit, die konfiguriert ist, eine Temperatur im Fermentationstankmodul (111) zu steuern;
ein Gebläse (135), das konfiguriert ist, Wärme der Temperatursteuereinheit abzuführen;
eine hintere Abdeckung (220), die hinter dem Fermentationsmodul (1) angeordnet ist, und die ein Durchgangsloch (271) hat; und
ein Gasabführkanalmodul (7), das mit dem Fermentationsmodul (1) verbunden ist, um Gas im Fermentationsmodul (1) abzuführen;
wobei das Durchgangsloch (271), das in der hinteren Abdeckung (220) ausgebildet ist, konfiguriert ist, Luft, die durch das Gebläse (135) geblasen wird, und das Gas, das vom Gasabführkanalmodul (7) abgeführt wird, durch das Durchgangsloch (271) abzuführen.

2. Getränkeherstellungsvorrichtung nach Anspruch 1, wobei die Temperatursteuereinheit eine Kühlkreislaufvorrichtung (13) ist, die einen Kompressor (131), einen Kondensator (132), einen Expansionsmechanismus (133) und einen Verdampfer (134), der in der Kühlkreislaufvorrichtung (13) ausgebildet ist, aufweist, so dass ein Kühlmittel im Kompressor (131), im Kondensator (132), im Expansionsmechanismus (133) und im Verdampfer (134) umläuft, wobei der Verdampfer (134) konfiguriert ist, eine Temperatur im Fermentationstankmodul (111) anzupassen,
wobei das Gebläse (135) konfiguriert ist, Wärme des Kondensators (132) abzuführen.

3. Getränkeherstellungsvorrichtung nach Anspruch 1 oder 2, wobei der Kondensator (132) zwischen dem Gebläse (135) und dem Durchgangsloch (271) angeordnet ist.

4. Getränkeherstellungsvorrichtung nach einem der Ansprüche 1 bis 3, die ferner Folgendes umfasst:
einen Hauptrahmen (230), der einen Aufnahmeraum (S11) für den Kondensator (132) hat, der im Hauptrahmen (230) ausgebildet ist, so dass der Kondensator (132) im Aufnahmeraum (S11) für den Kondensator (132) aufgenommen ist, und wobei der Aufnahmeraum (S11) für den Kondensator (132) mit dem Durchgangsloch (271) kommuniziert.

5. Getränkeherstellungsvorrichtung nach Anspruch 4, wobei ein Gebläsemontageabschnitt (236), an dem das Gebläse (135) montiert ist, im Hauptrahmen (230) ausgebildet ist, und
wobei sich der Gebläsemontageabschnitt (236) vor dem Aufnahmeraum (S11) für den Kondensator (132) befindet.

6. Getränkeherstellungsvorrichtung nach einem der Ansprüche 4 oder 5, wobei das Gasabführkanalmodul (7) Folgendes umfasst:
einen Gasabführkanal (71), der mit dem Fermentationsmodul (1) verbunden ist; und
ein Gasabführventil (73), das mit dem Gasabführkanal (71) verbunden ist,
wobei ferner ein Gasabführraum (S13), in dem das Gasabführventil (73) angeordnet ist, und der mit dem Durchgangsloch (271) kommuniziert, im Hauptrahmen (230) ausgebildet ist.

7. Getränkeherstellungsvorrichtung nach Anspruch 6, wobei eine Rückseite des Aufnahmeraums (S11) für den Kondensator und/oder des Gasabführraums (S13) offen ist.

8. Getränkeherstellungsvorrichtung nach einem der Ansprüche 6 oder 7,
wobei zwischen dem Aufnahmeraum (S11) für den Kondensator (132) und dem Gasabführraum (S13) eine Barriere vorgesehen ist, und/oder
wobei sich das Gasabführventil (73) hinter dem Fermentationsmodul (1) befindet.

9. Getränkeherstellungsvorrichtung nach einem der Ansprüche 2 bis 8,
wobei das Gebläse (135) eine Vorderseite, die zu einem Raum zwischen dem Kompressor (131) und dem Fermentationsmodul (1) zeigt, und eine Rückseite, die zum Kondensator (132) zeigt, hat; und
wobei sich das Durchgangsloch (271) hinter dem Kondensator (132) befindet.

10. Getränkeherstellungsvorrichtung nach einem der Ansprüche 2 bis 9, wobei der Kompressor (131) in einer Links-Rechts-Richtung vom Fermentationsmodul (1) beabstandet ist.

11. Getränkeherstellungsvorrichtung nach einem der Ansprüche 2 bis 10, wobei sich wenigstens ein Teil des Gebläses (135) in einer Links-Rechts-Richtung zwischen dem Kompressor (131) und dem Fermentationsmodul (1) befindet, und
wobei der Kondensator (132) hinter dem Gebläse (135) angeordnet ist.

12. Getränkeherstellungsvorrichtung nach einem der Ansprüche 2 bis 11,
wobei das Gebläse (135) zwischen dem Kompressor (131) und dem Kondensator (132) angeordnet ist; und
wobei sich das Durchgangsloch (271) hinter dem Kondensator (132) befindet.

13. Getränkeherstellungsvorrichtung nach einem der Ansprüche 2 bis 12, wobei der Kompressor (131), das Gebläse (135) und der Kondensator (132) in einer Vorne-Hinten-Richtung in einer Reihe angeordnet sind, oder
wobei der Kompressor (131), das Gebläse (135) und der Kondensator (132) in einer Richtung von vorn nach hinten in einer schräg verlaufenden Reihe angeordnet sind.

14. Getränkeherstellungsvorrichtung nach Anspruch 13, wobei ein Abstand zwischen dem Fermentationsmodul (1) und dem Kompressor (131) größer als ein Abstand zwischen dem Fermentationsmodul (1) und dem Kondensator (132) ist.

## Revendications

1. Dispositif de préparation de boisson comportant :
un module de fermentation (1) comportant un module de réservoir de fermentation (111) ayant une ouverture (170) formée dans le module de réservoir de fermentation (111), et un couvercle de fermentation (107) configuré pour ouvrir/fermer l'ouverture (170) ;
une commande de température configurée pour commander une température à l'intérieur du module de réservoir de fermentation (111) ;
un ventilateur soufflant (135) configuré pour dissiper la chaleur de la commande de température ;
un couvercle arrière (220) agencé derrière le module de fermentation (1) et ayant un trou traversant (271) ; et
un module de canal d'évacuation de gaz (7) relié au module de fermentation (1) pour évacuer du gaz à l'intérieur du module de fermentation (1) ;
dans lequel le trou traversant (271) est formé dans le couvercle arrière (220) configuré pour évacuer de l'air soufflé par le ventilateur soufflant (135) et le gaz évacué du module de canal d'évacuation de gaz (7) à travers le trou traversant (271).

2. Dispositif de préparation de boisson selon la revendication 1, dans lequel la commande de température est un dispositif à cycle de réfrigération (13) ayant un compresseur (131), un condenseur (132), un mécanisme de détente (133) et un évaporateur (134) formés dans le dispositif à cycle de réfrigération (13) de telle sorte qu'un fluide frigorigène circule dans le compresseur (131), le condenseur (132), le mécanisme de détente (133) et l'évaporateur (134), l'évaporateur (134) étant configuré pour régler une température à l'intérieur du module de réservoir de fermentation (111),
dans lequel le ventilateur soufflant (135) est configuré pour dissiper la chaleur du condenseur (132).

3. Dispositif de préparation de boisson selon la revendication 1 ou 2, dans lequel le condenseur (132) est agencé entre le ventilateur soufflant (135) et le trou traversant (271).

4. Dispositif de préparation de boisson selon l'une quelconque des revendications 1 à 3, comportant en outre :
un châssis principal (230) ayant un espace de réception (S11) de condenseur (132) formé dans le châssis principal (230) de telle sorte que le condenseur (132) est reçu dans l'espace de réception (S11) de condenseur (132) et l'espace de réception (S11) de condenseur (132) communique avec le trou traversant (271).

5. Dispositif de préparation de boisson selon la revendication 4, dans lequel une partie de montage de ventilateur soufflant (236) sur laquelle le ventilateur soufflant (135) est monté est formée dans le châssis principal (230), et
dans lequel la partie de montage de ventilateur soufflant (236) est située devant l'espace de réception (S11) de condenseur (132).

6. Dispositif de préparation de boisson selon l'une quelconque des revendications 4 ou 5, dans lequel le module de canal d'évacuation de gaz (7) comporte :
un canal d'évacuation de gaz (71) relié au module de fermentation (1) ; et
un clapet d'évacuation de gaz (73) relié au canal d'évacuation de gaz (71),
dans lequel un espace d'évacuation de gaz (S13) dans lequel le clapet d'évacuation de gaz (73) est agencé et qui communique avec le trou traversant (271), est en outre formé dans le châssis principal (230).

7. Dispositif de préparation de boisson selon la revendication 6, dans lequel une surface arrière de l'espace de réception de condenseur (S11) et/ou de l'espace d'évacuation de gaz (S13) est ouverte.

8. Dispositif de préparation de boisson selon l'une quelconque des revendications 6 ou 7,
dans lequel une barrière est prévue entre l'espace de réception (S11) de condenseur (132) et l'espace d'évacuation de gaz (S13), et/ou
dans lequel le clapet d'évacuation de gaz (73) est situé derrière le module de fermentation (1).

9. Dispositif de préparation de boisson selon l'une quelconque des revendications 2 à 8,
dans lequel le ventilateur soufflant (135) a une surface avant dirigée vers un espace entre le compresseur (131) et le module de fermentation (1) et une surface arrière dirigée vers le condenseur (132) ; et
dans lequel le trou traversant (271) est situé derrière le condenseur (132).

10. Dispositif de préparation de boisson selon l'une quelconque des revendications 2 à 9, dans lequel le compresseur (131) est espacé du module de fermentation (1) dans une direction gauche-droite.

11. Dispositif de préparation de boisson selon l'une quelconque des revendications 2 à 10, dans lequel au moins une partie du ventilateur soufflant (135) est située entre le compresseur (131) et le module de fermentation (1) dans une direction gauche-droite, et
dans lequel le condenseur (132) est agencé derrière le ventilateur soufflant (135).

12. Dispositif de préparation de boisson selon l'une quelconque des revendications 2 à 11,
dans lequel le ventilateur soufflant (135) est agencé entre le compresseur (131) et le condenseur (132) ; et
dans lequel le trou traversant (271) est situé derrière le condenseur (132).

13. Dispositif de préparation de boisson selon l'une quelconque des revendications 2 à 12, dans lequel le compresseur (131), le ventilateur soufflant (135) et le condenseur (132) sont agencés en rangée dans une direction avant-arrière, ou
dans lequel le compresseur (131), le ventilateur soufflant (135) et le condenseur (132) sont agencés en rangée pour être inclinés dans une direction avant-arrière.

14. Dispositif de préparation de boisson selon la revendication 13, dans lequel une distance entre le module de fermentation (1) et le compresseur (131) est plus grande qu'une distance entre le module de fermentation (1) et le condenseur (132).
